# EUROPÄISCHE PATENTSCHRIFT

(11) **EP 4 616 166 B1**
(45) Veröffentlichungstag und Bekanntmachung des Hinweises auf die Patenterteilung: **07.10.2026**
(21) Anmeldenummer: 23805027.2
(22) Anmeldetag: 10.11.2023
(51) Int. Cl.: G01M 5/00

(54) **VORRICHTUNG UND VERFAHREN ZUM PRÜFEN VON LÄNGLICHEN PRÜFKÖRPERN**
DEVICE AND METHOD FOR TESTING ELONGATE TEST SPECIMENS
DISPOSITIF ET PROCÉDÉ DE TEST D'ÉPROUVETTES ALLONGÉES

(30) Priorität: 11.11.2022 DE 102022211982
(43) Veröffentlichungstag der Anmeldung: 17.09.2025
(73) Patentinhaber: Fraunhofer-Gesellschaft zur Förderung der angewandten Forschung e.V., 80686 München (DE)
(72) Erfinder: ROSEMEIER, Malo, 27572 Bremerhaven (DE); MELCHER, David, 27572 Bremerhaven (DE); HALLER, Bernd, 27572 Bremerhaven (DE); MEYER, Christian, 27572 Bremerhaven (DE)
(74) Vertreter: Pfenning, Meinig & Partner mbB
(86) Internationale Anmeldenummer: PCT/EP2023/081463
(87) Internationale Veröffentlichungsnummer: WO 2024/100264

(56) Entgegenhaltungen:
- US-A1- 2017 241 860
- WINKLER ERICH: "Schweissnaht durchleuchten", TECHNIK WINDKRAFT, 31 December 2010 (2010-12-31), pages 1 - 3, XP093117252, Retrieved from the Internet <URL:https://www.all-electronics.de/wp-content/uploads/migrated/article-pdf/59154/ee10-04-018.pdf> [retrieved on 20240109]

## Beschreibung

Die vorliegende Erfindung liegt auf dem Gebiet des Maschinenbaus. Sie betrifft eine Vorrichtung und ein Verfahren zum Prüfen von länglichen Prüfkörpern. Sie ist mit besonderem Vorteil in der Windenergietechnik einsetzbar, wobei insbesondere eine Prüfung von ganzen Rotorblättern oder von Rotorblattsegmenten von Windenergieanlagen ermöglicht wird.

Die Strukturprüfung von länglichen, schlanken Prüfkörpern, wie z.B. ganzen Rotorblättern oder Rotorblattsegmenten von Windenergieanlagen (WEA) stellt bei immer größeren Blattlängen eine Herausforderung dar. Die Strukturprüfung erfolgt vorzugsweise zyklisch und in Resonanz, wobei Anregungen in Schlag- und/oder Schwenkrichtung vorgesehen sein können. Je länger ein Prüfkörper ist, desto geringer ist seine Eigenfrequenz und desto länger ist die Prüfdauer. Daher verlängert sich auch die Zeit, bis ein neuer Typ bspw. eines Rotorblatts für eine WEA eine Zertifizierung und Freigabe zum Betrieb erhält, was sich verlangsamend auf die Umsetzung einer Energiewende hin zu einer CO₂-neutralen Energieerzeugung auswirkt.

Dieser Herausforderung kann bspw. mit der Anbringung von elastischen Elementen am Prüfkörper entgegengewirkt werden, welche die Systemeigenfrequenz heraufsetzt. Beispielsweise offenbart die DE 10 2018 218 515 A1 ein Verfahren, bei dem mindestens zwei aktive Lasteinleitungsmittel bereitgestellt werden, die jeweils an einem Lastrahmen angreifen, wobei ein erstes der mindestens zwei aktiven Lasteinleitungsmittel zur Lasteinleitung in eine Schwenkrichtung des Rotorblatts eingerichtet wird und ein zweites der mindestens zwei aktiven Lasteinleitungsmittel zur Lasteinleitung in eine Schlagrichtung des Rotorblatts eingerichtet wird. Weiterhin wird gemäß DE 10 2018 218 515 A1 mindestens ein passives Lasteinleitungsmittel bereitgestellt, wobei für ein System, welches das Rotorblatt und das mindestens eine passive Lasteinleitungsmittel umfasst, eine Systemeigenfrequenz für die Schwenkrichtung und/oder für die Schlagrichtung durch das mindestens eine passive Lasteinleitungsmittel verändert wird.

Ein Problem besteht aber weiterhin darin, dass die Auslenkung in Schlagrichtung bei immer länger werdenden Prüfkörpern im Prüfkörperspitzenbereich derart groß wird, dass Vorrichtungen mit elastischen Elementen zu sehr großen Wegen und/oder Durchbiegungen der elastischen Elemente führen und, damit einhergehend, sehr große Längen für die elastischen Elemente benötigt werden. Dadurch werden die elastischen Elemente sehr schwer und wirken möglicherweise als mitschwingende Massen, aufgrund ihres Gewichts, einer gewünschten Federwirkung entgegen.

Eine weitere Herausforderung stellt die Minimierung der Überlast, also der Abweichung der Testbiegemomentenverteilung von der Zielbiegemomentenverteilung, immer längerer Prüfkörper dar. Dieser Herausforderung kann bspw. mit der Anbringung von Massen im Prüfkörperspitzenbereich für bspw. eine Prüfung in Schwenkrichtung entgegengewirkt werden. Nachteilig ist dabei, dass die anzubringenden Massen in vielen Fällen dabei sehr groß werden müssen, so dass zulässige Querkräfte in Schlagrichtung überschritten werden, wodurch die Mittelbiegemomentenverteilung durch die Gewichtskraft dieser Massen während einer Prüfung in Schwenkrichtung unzulässig erhöht wird oder ein unzulässiges Torsionsmoment infolge großer Durchbiegung an der Spitze eingeleitet wird. Abhilfe können vom Prüfkörper entkoppelte Massen schaffen. Diese wirken dann nur in eine Vorzugsrichtung, bspw. in Schwenkrichtung. Als vorteilhaft hat sich dabei erwiesen, dass mit Hilfe entkoppelter Massen, die in Schwenkrichtung wirken, und elastischen Elementen, die in Schlagrichtung wirken, sich die Systemeigenfrequenzen bei einer bi-axialen Anregung aufeinander abstimmen lassen, bspw. in Verhältnissen von 1:1, 1:2, etc. (vgl. DE 10 2018 218 515 A1), so dass eine zeitgleiche Prüfung beider Richtungen und somit eine Gesamtzeitersparnis des Testprogramms bestehend aus mehreren Prüfsequenzen aus Schwenk- und Schlagprüfung möglich wird.

Ein Problem kann aber darin bestehen, dass die Auslenkung in Schlagrichtung bei immer längeren Prüfkörpern im Prüfkörperspitzenbereich derart groß wird, wodurch bei herkömmlichen Vorrichtungen mit entkoppelten Massen sehr lange Stangen benötigt werden, um parasitäre Kräfte (die nicht in die gewünschte Vorzugsrichtung wirken) infolge großer Winkel zu minimieren. Lange Stangen sind dabei aber stabilitätsgefährdet und bringen eine zusätzliche Massenträgheit in das System ein, die ebenfalls nicht in die Vorzugsrichtung wirkt und somit unerwünscht ist.

Die Druckschrift US 2017/0241860 A1 zeigt eine Vorrichtung zur Ermüdungsprüfung eines Windturbinenblattes und ein System und Verfahren unter Verwendung einer solchen Vorrichtung. Die Vorrichtung umfasst eine Basis zum Stützen eines ersten Endes des Windturbinenblatts und eine Betätigungsanordnung in Schwenkrichtung. Die Betätigungsanordnung umfasst einen bodengestützten Aktuator in Schwenkrichtung und eine flexible Kabelanordnung zum Verbinden des Aktuators mit dem Blatt. Der Aktuator in Schwenkrichtung und die flexible Kabelanordnung sind so ausgelegt, dass sie das Blatt relativ zur Basis in Schwenkrichtung durch wiederholtes Ziehen des Blatts in eine im Wesentlichen horizontale Richtung zyklisch auslenken.

Die Veröffentlichung "Schweißnaht durchleuchten", von Erich Winkler, in Technik Windkraft vom 31. Dezember 2010, Seiten 1-3, XP093117252, verweist auf den Einsatz von Stahlseilen beim Prüfen von Windenergieanlagenrotorblättern, die über Umlenkrollen zum Rotor geführt und an verschiedenen Positionen entweder direkt oder über mechanische Klemmen am Rotorblatt befestigt werden.

Aufgabe der vorliegenden Erfindung ist es, die bekannten Systeme und Verfahren noch weiter zu verbessern und zumindest einen Teil der oben genannten Probleme zu beheben.

Dies wird gelöst durch eine Vorrichtung zum Prüfen eines länglichen Prüfkörpers gemäß Anspruch 1. Außerdem wird die Aufgabe durch ein System oder ein Verfahren gemäß einem der nebengeordneten Ansprüche gelöst. Vorteilhafte Ausführungsformen ergeben sich aus den abhängigen Ansprüchen sowie aus der nachfolgenden Beschreibung und den Figuren.

Eine Vorrichtung zum Prüfen eines länglichen Prüfkörpers umfasst demnach eine Einspannvorrichtung zum Einspannen des Prüfkörpers, so dass dieser sich von der Einspannvorrichtung aus seiner Länge nach in eine Längsrichtung mit einer horizontalen Richtungskomponente erstreckt.

Die Vorrichtung umfasst außerdem mindestens einen Aktuator zum Auslenken des Prüfkörpers.

Die Vorrichtung umfasst außerdem mindestens ein Seil.

Die Vorrichtung umfasst außerdem eine erste Umlenkrolle, die auf einer ersten Seite des Prüfkörpers angeordnet ist, so dass ein erster Seilabschnitt des mindestens einen Seils über die erste Umlenkrolle zu einem ersten seitlichen Angriffspunkt am Prüfkörper oder einem Lastrahmen für den Prüfkörper führbar und mit dem ersten Angriffspunkt verbindbar ist.

Die Vorrichtung umfasst außerdem eine zweite Umlenkrolle, die auf einer der ersten Seite gegenüberliegenden zweiten Seite des Prüfkörpers angeordnet ist, so dass ein zweiter Seilabschnitt des mindestens einen Seils über die zweite Umlenkrolle zu einem zweiten seitlichen Angriffspunkt am Prüfkörper oder dem Lastrahmen für den Prüfkörper führbar und mit dem zweiten Angriffspunkt verbindbar ist, wobei der zweite seitliche Angriffspunkt dem ersten seitlichen Angriffspunkt entgegengesetzt ist.

Die Vorrichtung umfasst außerdem mindestens eine Spannvorrichtung zum Spannen des ersten und des zweiten Seilabschnitts.

Durch die Vorrichtung wird eine Lösung der obigen Aufgabe vorteilhaft ermöglicht. Das mindestens eine Seil, geführt über die Umlenkrollen, ermöglicht vorteilhaft eine Kontrolle des Prüfkörpers sowie ein Einwirken auf den Prüfkörper. Eine Besonderheit besteht darin, dass die Einwirkung für eine Bewegung entlang der mit dem Prüfkörper verbundenen Seilabschnitte einerseits (also z.B. horizontal), und für eine Bewegung quer zu den mit dem Prüfkörper verbundenen Seilabschnitten andererseits unterschiedlich ausgestaltet werden kann. Damit können beispielsweise für die Schlagrichtung und/oder für die Schwenkrichtung spezifische Belastungen eingestellt werden. Diese speziellen Eigenschaften der Vorrichtung werden im Folgenden noch näher erläutert.

Ein vorgeschlagenes System zum Prüfen eines länglichen Prüfkörpers umfasst die hier vorgestellte Vorrichtung sowie den Prüfkörper, der beispielsweise ein Rotorblatt oder ein Rotorblattsegment einer Windenergieanlage sein kann. Der Prüfkörper ist dabei in die Einspannvorrichtung eingespannt, so dass er sich von der Einspannvorrichtung aus seiner Länge nach in die Längsrichtung mit der horizontalen Richtungskomponente erstreckt, wobei der erste Seilabschnitt mit dem ersten seitlichen Angriffspunkt verbunden ist und der zweite Seilabschnitt mit dem zweiten Angriffspunkt verbunden ist.

Ein vorgeschlagenes Verfahren zum Prüfen eines Prüfkörpers findet statt unter Verwendung des genannten Systems, wobei der Prüfkörper mittels des mindestens einen Aktuators ausgelenkt wird und mittels der mindestens einen Spannvorrichtung der erste und der zweite Seilabschnitt gespannt werden.

Typischerweise wird eine zyklische Belastung in Schlag- und/oder Schwenkrichtung, bzw. in vertikale und/oder horizontale Richtung bereitgestellt.

Es sei betont, dass die hier im Zusammenhang mit der Vorrichtung beschriebenen Merkmale auch für das System sowie das Verfahren beansprucht werden können und umgekehrt.

In einem Beispiel umfasst der mindestens eine Aktuator einen ersten Aktuator zum Auslenken des Prüfkörpers in eine erste Auslenkungsrichtung und einen zweiten Aktuator zum Auslenken des Prüfkörpers in eine zweite Auslenkungsrichtung quer zur ersten Auslenkungsrichtung.

Beispielsweise umfasst der mindestens eine Aktuator einen Vertikalaktuator zum Auslenken des Prüfkörpers mit einer vertikalen Richtungskomponente. Die vertikale Richtungskomponente kann zum Beispiel einer Schlagrichtung eines zu prüfenden Rotorblatts einer Windenergieanlage entsprechen. Beim Auslenken des Prüfkörpers in diese Richtung, die typischerweise quer zum Seil verläuft, wird ein Zug auf den ersten Seilabschnitt und den zweiten Seilabschnitt ausgeübt, wenn der erste und der zweite Seilabschnitt mit dem Prüfkörper verbunden sind. Die mindestens eine Spannvorrichtung spannt den ersten und den zweiten Seilabschnitt in einer möglichen Ausführungsform so, dass eine Rückstellkraft auf den ausgelenkten Prüfkörper ausgeübt wird. Damit wird eine besonders gute Kontrolle einer Auslenkung in die vertikale Richtung (z.B. Schlagrichtung) über das Seil ermöglicht. Das Verfahren kann entsprechend vorsehen, dass der Prüfkörper in eine Richtung mit einer vertikalen Richtungskomponente ausgelenkt wird, wobei durch das mindestens eine Seil eine Rückstellkraft auf den vertikal ausgelenkten Prüfkörper ausgeübt wird. Dieser Effekt entspricht etwa der wirkweise eines wie oben beschriebenen elastischen Elements.

Alternativ oder zusätzlich umfasst der mindestens eine Aktuator einen Horizontalaktuator zum Auslenken des Prüfkörpers in eine zweite Auslenkungsrichtung mit einer horizontalen Richtungskomponente. Hier kann es sich zum Beispiel um eine Schwenkrichtung eines zu prüfenden Rotorblatts einer Windenergieanlage handeln. Die horizontale Auslenkung erfolgt dabei typischerweise im Wesentlichen entlang des Seils. Das Seil kann dabei in manchen Ausführungsformen beispielsweise so angeordnet sein, dass es diese Art der Auslenkung toleriert, indem es frei läuft und dabei beispielsweise keine Rückstellkraft auf den Prüfkörper aufbringt. Dabei können in möglichen Ausführungen träge Massen an dem Seil angeordnet sein, die sich bei der Auslenkung mit dem Seil bewegen und die dadurch entstehenden Trägheitskräfte über das Seil auf den Prüfkörper wirken. Eine Ausgestaltung des Verfahrens kann vorsehen, dass der Prüfkörper in eine Richtung mit einer horizontalen Richtungskomponente ausgelenkt wird, und das mindestens eine Seil die horizontale Auslenkung toleriert. In Reaktion auf die Auslenkung läuft das Seil über die erste und die zweite Umlenkrolle. Die Auslenkung kann optional durch mindestens eine mit dem mindestens einen Seil verbundene bewegliche Masse beeinflusst werden. Dieser Effekt entspricht etwa der wirkweise einer wie oben beschriebenen entkoppelten Masse. Spezielle Ausgestaltungen von dieser Möglichkeit werden unten noch näher erläutert.

Das mindestens eine Seil kann beispielsweise als Drahtseil ausgebildet sein oder als Kunststoffseil. Das mindestens eine Seil kann beispielsweise Dyneema^{®}-Fasern enthalten.

Beispielsweise kann das mindestens eine Seil ein erstes Seil und ein zweites Seil umfassen. Dabei kann vorgesehen sein, dass der erste Seilabschnitt ein Abschnitt des ersten Seils ist, so dass das erste Seil mit dem ersten Angriffspunkt verbindbar ist, und der zweite Seilabschnitt ein Abschnitt des zweiten Seils ist, so dass das zweite Seil mit dem zweiten Angriffspunkt verbindbar ist. Die Vorrichtung kann eine erste Seilfixierung aufweisen, zum Befestigen des ersten Seils, und eine zweite Seilfixierung, zum Befestigen des zweiten Seils. Die mindestens eine Spannvorrichtung kann dann eine erste Spannvorrichtung und eine zweite Spannvorrichtung umfassen, wobei die erste Spannvorrichtung zwischen der ersten Umlenkrolle und der ersten Seilfixierung an dem ersten Seil angreift und die zweite Spannvorrichtung zwischen der zweiten Umlenkrolle und der zweiten Seilfixierung an dem zweiten Seil angreift. In solchen Ausführungen sind also mindestens zwei am Prüfkörper befestigte, zusätzlich fixierte Seile vorhanden. Diese Anordnungen können z.B. zum Beeinflussen einer vertikalen Auslenkung vorgesehen sein und/oder einer gezielten Kraftleinleitung in die horizontale Richtung durch Steuerung und/oder Regelung der einzelnen Spannvorrichtungen dienen.

Alternativ zu den zusätzlich fixierten Seilen, sind Ausführungen vorgesehen, in denen das Seil wie oben kurz angedeutet frei bzw. unter Einfluss träger Massen laufen kann. Dabei kann das mindestens eine Seil ein erstes Seil umfassen, wobei sowohl der erste Seilabschnitt als auch der zweite Seilabschnitt Abschnitte dieses ersten Seils sind. Dann ist also das erste Seil über die erste Umlenkrolle und die zweite Umlenkrolle geführt und mit dem ersten und dem zweiten Angriffspunkt verbindbar. Gleichermaßen kann das mindestens eine Seil ein erstes Seil und ein zweites Seil umfassen, wobei der erste Seilabschnitt ein Abschnitt des ersten Seils ist und der zweite Seilabschnitt ein Abschnitt des zweiten Seils ist, wobei das erste und das zweite Seil miteinander verbunden sind. Die zwei Seile können sich dann also im Gleichlauf bewegen. Diese Variante kann in ihrer Funktionalität der Variante mit einem einzigen Seil entsprechen, wobei statt einem Seil zwei miteinander verbundene Teile vorhanden sind. Anders ausgedrückt, ist das Seil unterbrochen oder durchschnitten, wodurch bspw. Gegenstände wie träge Massen dazwischen angeordnet werden können. Die trägen Massen können aber natürlich auch, z.B. mit Seilklemmen, an einem einzigen Seil befestigt werden.

Insbesondere sieht also eine mögliche Ausführung vor, dass das mindestens eine Seil mit mindestens einer beweglichen Masse verbunden ist. Diese bewegliche Masse kann bei einer Auslenkung als träge Masse auf das Seil und dadurch auf den Prüfkörper wirken. Die bewegliche Masse kann als direktional entkoppelte Masse ausgestaltet sein, die bspw. nur eine Auslenkung des Prüfkörpers in eine bestimmte Richtung, z.B. die horizontale Richtung, beeinflusst.

Die bewegliche Masse kann, wie oben kurz angedeutet, insbesondere dadurch in Bewegung versetzt werden, dass das Seil bei einer z.B. horizontalen Auslenkung des Prüfkörpers über die Rollen läuft und so seiner Länge nach verschoben wird.

Die bewegliche Masse kann bspw. derart angeordnet sein, dass sie bei einem Auslenken des Prüfkörpers in eine Richtung mit einer Komponente längs zum Seil, zum Beispiel mit einer horizontalen Komponente, welches einen asymmetrischen Zug am ersten Seilabschnitt und zweiten Seilabschnitt bewirkt, eine Bewegung erfährt. Die bewegliche Masse kann bspw. derart angeordnet sein, dass sie bei einer rein vertikalen Auslenkung des Prüfkörpers nicht verschoben wird, so dass sie auf vertikale Auslenkung keinen Einfluss nimmt, sondern direktional entkoppelt nur bei Auslenkungen mit horizontaler Richtungskomponente auf den Prüfkörper wirkt.

Die mindestens eine bewegliche Masse kann bspw. mittels eines Scharniers schwingbar gelagert sein und/oder über einen Hebelarm und/oder einen Winkelbalken mit dem mindestens einen Seil verbunden sein. Die mindestens eine bewegliche Masse kann beispielsweise auch längs zu dem mindestens einen Seil verschiebbar gelagert sein. Beispielsweise kann sie auf Rollen oder Kufen oder Schienen gelagert sein.

Die bewegliche Masse kann z.B. auf einem horizontalen Schlitten angeordnet sein. Sie wirkt dann auslenkungsunabhängig als träge Masse, abhängig von ihrer Geschwindigkeit und Beschleunigung. Eine durch die träge Masse verursachte Trägheitskraft wird dabei in das Seil eingeleitet. Eine Gewichtskraft der Masse aufgrund von auf die Masse wirkender Gravitation hat bei dieser Anordnung keinen Einfluss. Die bewegliche Masse kann aber alternativ beispielsweise auf einer Schräge, also nicht horizontal, gelagert sein. Sie kann dadurch auch so ausgelegt sein, dass eine Komponente der Gewichtskraft auf das Seil wirkt und dadurch eine konstante auslenkende Kraft auf den Prüfkörper in eine Richtung bewirkt wird. Die bewegliche Masse kann z.B. so angeordnet sein, dass eine Gewichtskraft auf die bewegliche Masse wirkt, durch die ein statischer Zug am ersten oder zweiten seitlichen Angriffspunkt bewirkt wird, durch den der Prüfkörper z.B. eine konstante Auslenkung in Richtung des Zuges erfahren kann. Anders formuliert wird durch solch eine Anordnung der Masse erreicht, dass eine Komponente der Gewichtskraft der beweglichen Masse auf das Seil wirkt, wodurch ein statischer Zug am ersten oder zweiten seitlichen Angriffspunkt bewirkt wird, durch den der Prüfkörper z.B. eine konstante Auslenkung in Richtung des Zuges erfahren kann.

Die bewegliche Masse kann eine oder mehrere horizontal verfahrbare Massen umfassen. Beispielsweise können die eine oder mehrere Massen unterstützend gelagert sein, so dass eine auf die bewegliche(n) Masse(n) wirkende Gewichtskraft keinen Zug am ersten oder zweiten seitlichen Angriffspunkt bewirkt. Die bewegliche Masse kann beispielsweise auf eine oder mehrere solcher beweglicher Massen beschränkt sein, so dass insgesamt kein gewichtskraftbedingter Zug entsteht.

Das mindestens eine Seil kann bspw. derart eingerichtet sein, dass es vom ersten seitlichen Angriffspunkt zur ersten Umlenkrolle läuft, wobei, vom Prüfkörper aus gesehen, nach der ersten Umlenkrolle die bewegliche Masse und die Spannvorrichtung an dem mindestens einen Seil angreifen, und wobei das mindestens eine Seil nach der beweglichen Masse und der Spannvorrichtung zur zweiten Umlenkrolle läuft und von der zweiten Umlenkrolle schließlich zu dem zweiten seitlichen Angriffspunkt läuft.

Es kann vorgesehen sein, dass die mindestens eine Spannvorrichtung eine erste Spannvorrichtung und eine zweite Spannvorrichtung umfasst, wobei das mindestens eine Seil derart eingerichtet sein kann, dass es vom ersten seitlichen Angriffspunkt aus zur ersten Umlenkrolle läuft, wobei, vom Prüfkörper aus gesehen, nach der ersten Umlenkrolle zunächst die erste Spannvorrichtung an dem mindestens einen Seil angreift, anschließend die mindestens eine bewegliche Masse an dem mindestens einen Seil angreift, anschließend die zweite Spannvorrichtung an dem mindestens einen Seil angreift und das Seil dann von der zweiten Spannvorrichtung zur zweiten Umlenkrolle läuft und von der zweiten Umlenkrolle schließlich zu dem zweiten seitlichen Angriffspunkt läuft.

Die mindestens eine Spannvorrichtung kann zum Beispiel einen Spannaktuator umfassen, der bspw. als elektrischer, hydraulischer oder pneumatischer Aktuator ausgebildet sein kann. Alternativ oder zusätzlich kann die mindestens eine Spannvorrichtung einen Motor und/oder eine Seilwinde und/oder eine Feder und/oder eine Blattfeder und/oder ein Spannschloss und/oder einen oder mehrere Umlenkrollen und/oder einen Flaschenzug umfassen. Eine mögliche Spannvorrichtung kann beispielsweise alternativ oder auch zusätzlich eine Spannschraube bzw. Doppelmutter mit einem Rechts- und einem gegenläufigen Linksgewinde zum Spannen des Seils durch Kürzung dessen Gesamtlänge umfassen.

Die mindestens eine Spannvorrichtung kann als aktive Spannvorrichtung ausgestaltet sein, die einen Motor und/oder einen Aktuator umfasst, wobei der Motor und/oder der Aktuator steuerbar und/oder regelbar sein können.

Es kann vorgesehen sein, dass die erste Umlenkrolle und die zweite Umlenkrolle auf gleicher Höhe angeordnet sind.

Die Vorrichtung kann beispielsweise derart eingerichtet sein, dass sich der Prüfkörper in einem unausgelenkten Zustand durch eine Verbindungslinie von der ersten Umlenkrolle zur zweiten Umlenkrolle erstreckt, so dass der erste Seilabschnitt und der zweite Seilabschnitt mit dem Prüfkörper derart verbindbar sind, dass ein durch den ersten Seilabschnitt vermittelter Zug und ein durch den zweiten Seilabschnitt vermittelter Zug in entgegengesetzte Richtungen, insbesondere in genau entgegengesetzte Richtungen, wirken. Ein durch die Spannvorrichtung vermittelter Zug an den beiden Seilenden hebt sich dann in der Ruhelage beispielsweise auf, wobei der durch die Spannvorrichtung vermittelte Zug über die beiden Seilabschnitte zu wirken beginnen kann, sobald eine Auslenkung des Prüfkörpers erfolgt, deren Bewegungsrichtung nicht mit der Ausrichtung der unausgelenkten Seilabschnitte übereinstimmt.

Die Vorrichtung kann aber auch derart eingerichtet sein, dass sich der Prüfkörper in einem unausgelenkten Zustand außerhalb einer Verbindungslinie von der ersten Umlenkrolle zur zweiten Umlenkrolle erstreckt, so dass der erste Seilabschnitt und der zweite Seilabschnitt mit dem Prüfkörper derart verbindbar sind, dass ein durch den ersten Seilabschnitt vermittelter Zug und ein durch den zweiten Seilabschnitt vermittelter Zug eine Vorspannung, insbesondere in eine Richtung mit einer vertikalen Richtungskomponente, auf den unausgelenkten Prüfkörper ausüben. Dann kann bspw. durch die mindestens eine Spannvorrichtung eine vertikale wirkende Kraft auf den Prüfkörper in Ruhelage ausgeübt werden.

Nachfolgend wird die Erfindung anhand von Figuren beispielhaft erläutert.

Darin zeigen:
- Fig. 1: Eine Prüfanordnung zum Prüfen eines Rotorblatts einer Windenergieanlage, mit einem über zwei Umlenkrollen geführten Seil,
- Fign. 2-3: eine Ausführung der Prüfanordnung mit einer Spannvorrichtung und einer beweglichen Masse mit einem Hebelarm,
- Fign. 4-5: Ausführungen von beweglichen Massen,
- Fig. 6: eine Ausführung der Prüfanordnung mit einer Spannvorrichtung und einer horizontal verschiebbaren beweglichen Masse,
- Fign. 7-8: eine Ausführung der Prüfanordnung mit einer Spannvorrichtung,
- Fign. 9-10: eine Ausführung der Prüfanordnung mit zwei Spannvorrichtungen und einer beweglichen Masse,
- Fign. 11-12: eine Ausführung der Prüfanordnung mit unterschiedlich hoch angeordneten Umlenkrollen,
- Fign. 13-14: eine Ausführung der Prüfanordnung mit zwei fixierten Seilen, und
- Fign. 15-18: Ausführungen von Spannvorrichtungen.

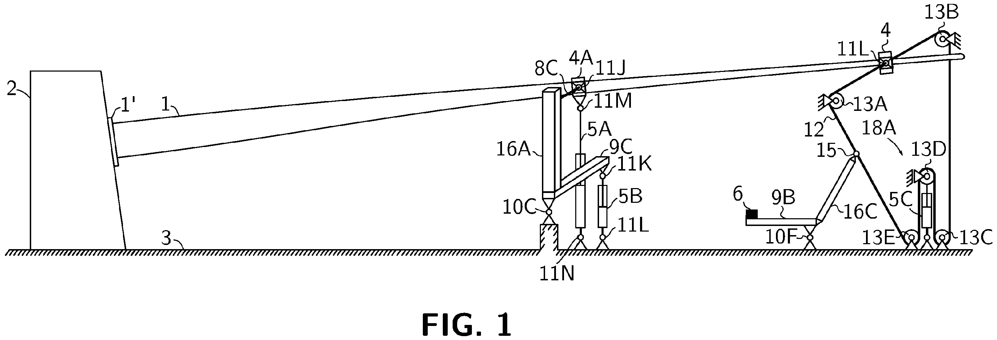

Fig. 1 zeigt eine Vorrichtung zum Prüfen eines länglichen Prüfkörpers 1. Der Prüfkörper 1 in Form eines Rotorblatts einer Windenergieanlage ist an einer Einspannstelle 1' in eine Einspannvorrichtung 2 der Vorrichtung eingespannt, so dass er sich von der Einspannvorrichtung 2 aus seiner Länge nach in eine Längsrichtung mit einer horizontalen Richtungskomponente erstreckt.

Anmeldungsgemäße Vorrichtungen umfassen mindestens einen Aktuator 5A, 5B zum Auslenken des Prüfkörpers.

Gezeigt sind zwei Aktuatoren, die jeweils mit einem Boden 3 verbunden sind, wobei ein erster Aktuator zum Auslenken des Prüfkörpers in eine erste Auslenkungsrichtung und ein zweiter Aktuator zum Auslenken des Prüfkörpers in eine zweite Auslenkungsrichtung quer zur ersten Auslenkungsrichtung eingerichtet ist.

Der erste Aktuator ist als Vertikalaktuator 5A ausgestaltet, der in die Vertikale aktuierbar ist und über ein erstes Gelenk 11N mit dem Boden 3 und über ein zweites Gelenk 11M mit einem am Prüfkörper angeordneten Lastrahmen 4A verbunden ist.

Der zweite Aktuator ist als Horizontalaktuator 5B ausgebildet, zum Auslenken des Prüfkörpers 1 in eine zweite Auslenkungsrichtung mit einer horizontalen Richtungskomponente. Dieser Horizontalaktuator 5B ist ebenfalls in die Vertikale aktuierbar und ist dabei über ein erstes Gelenk 11N mit dem Boden verbunden und über ein zweites Gelenk 11K mit einem sich horizontal erstreckenden Hebelarm 9C verbunden. Dieser Hebelarm 9C ist dann an einem dem Aktuator abgewandten Ende über ein Scharnier 10C gegenüber dem Boden schwenkbar gelagert ist, und von diesem Ende aus erstreckt sich ein Winkelbalken 16A vertikal (90° zum Hebelarm 9C) auf die Höhe des Prüfkörpers, wo der Winkelbalken 16A dann wiederum gelenkig über eine im wesentlichen horizontale Stange 8C und ein Gelenk 11J mit dem Lastrahmen 4A verbunden ist.

Die in den nachfolgenden Figuren erläuterten Ausführungen haben z.B. einen oder beide dieser Aktuatoren. Es versteht sich, dass die genaue Ausführung der Aktuatoren hier nur beispielhaft wiedergegeben ist und Vertikalaktuatoren und Horizontalaktuatoren auch anders ausgestaltet werden können.

Eine Besonderheit des vorgestellten Prüfstands kann in dem Seil 12 gesehen werden, das zwischen den Aktuatoren und einer Spitze, d.h. einem der Einspannstelle 1' gegenüberliegenden Ende des Prüfkörpers 1, über einen weiteren Lastrahmen 4 am Prüfkörper 1 angreift. Zusätzlich oder alternativ können ein oder mehrere Seile auch zwischen Einspannstelle 1' und den Aktuatoren oder zwischen den Aktuatoren selbst angeordnet und am Prüfkörper befestigt werden.

Eine erste Umlenkrolle 13A ist auf einer ersten Seite des Prüfkörpers 1 angeordnet, so dass ein erster Seilabschnitt des Seils 12 über die erste Umlenkrolle 13A zu einem ersten seitlichen Angriffspunkt 11L am Lastrahmen 4 geführt und mit dem ersten Angriffspunkt 11L wie in der Figur gezeigt verbunden werden kann.

Eine zweite Umlenkrolle 13B ist auf einer der ersten Seite gegenüberliegenden zweiten Seite des Prüfkörpers 2 angeordnet, so dass ein zweiter Seilabschnitt des Seils 12 über die zweite Umlenkrolle 13B zu einem zweiten seitlichen Angriffspunkt am Lastrahmen 4 geführt und mit dem zweiten Angriffspunkt verbunden werden kann, wobei der zweite seitliche Angriffspunkt dem ersten seitlichen Angriffspunkt entgegengesetzt ist. Eine Spannvorrichtung 18A mit einem Spannaktuator 5C dient zum Spannen des Seils 12 und somit des ersten und des zweiten Seilabschnitts.

Bei einer Verwendung des Systems aus Fig. 1 wird also typischerweise der Prüfkörper mittels der Aktuatoren 5A und/oder 5B ausgelenkt, wobei durch die Spannvorrichtung 18A der erste und der zweite Seilabschnitt gespannt werden. Die Spannvorrichtung 18A kann als aktive Spannvorrichtung ausgestaltet sein, bei der der Aktuator 5C bzw. ein Motor regelbar ist. In einem Verfahren kann die Auslenkung überwacht und die Auslenkungsaktuatoren 5A, 5B sowie der Spannaktuator 5C können geregelt werden. Wenn beispielsweise nur kleinere vertikalen Auslenkungen zu erwarten sind, kann es auch ausreichen, den Aktuator 5C vorzuspannen und still zu halten und nur über die Nachgiebigkeit des Seils selbst zu agieren.

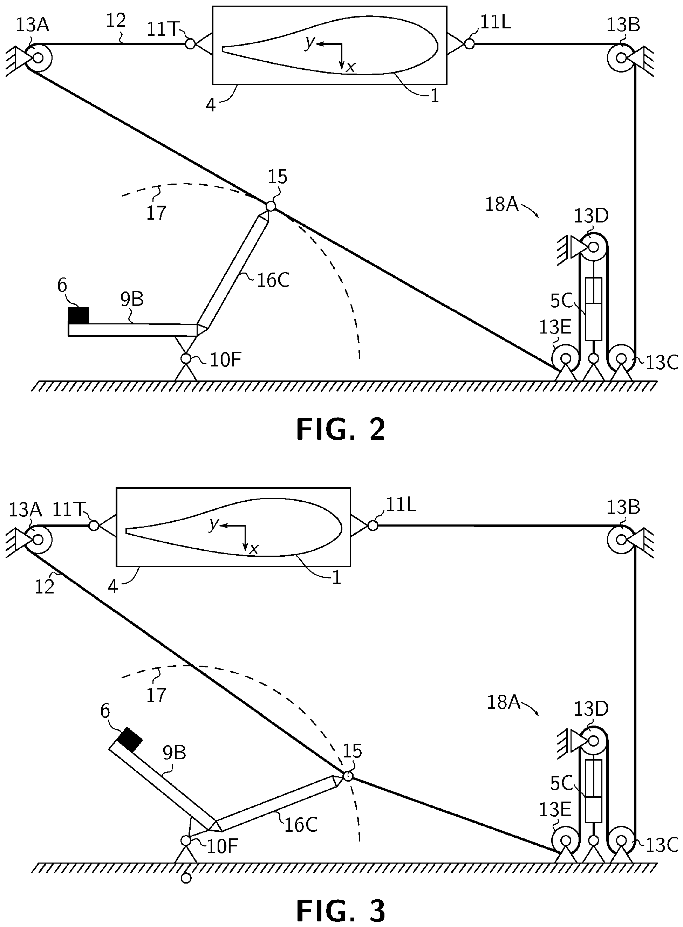

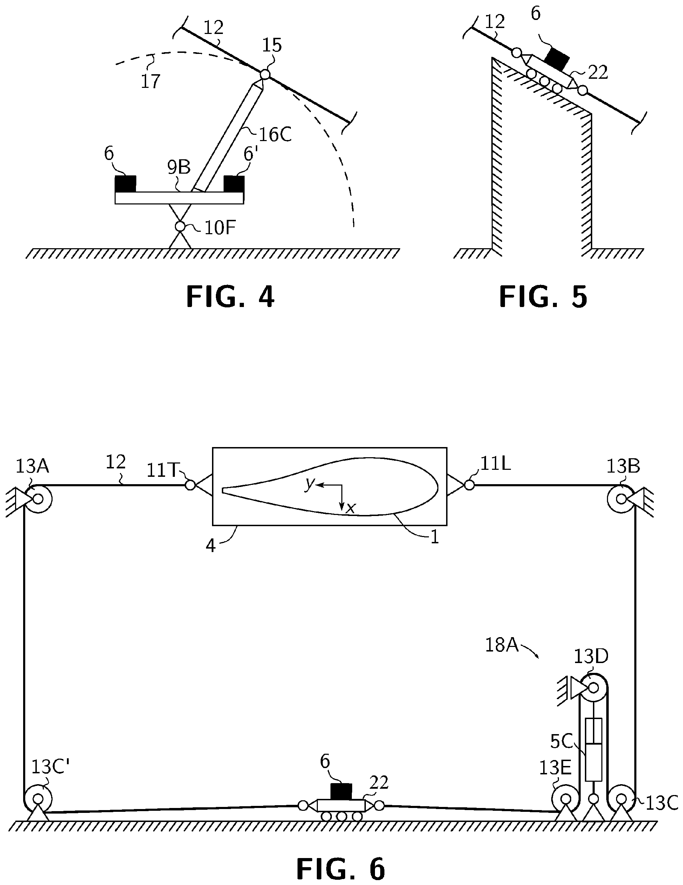

Figur 1 zeigt dabei rein beispielhaft eine mögliche Seilkonfiguration. Diese Konfiguration ist auch in den Figuren 2 und 3 in einer Schnittansicht nochmals im Detail dargestellt ist. Im Rahmen dieser Anmeldung sind auch andere Seilkonfigurationen vorgesehen, die sich bspw. aus den Figuren 4 bis 18 ergeben und die in der Anordnung aus Figur 1 zusätzlich oder alternativ vorhanden sein können.

In möglichen Ausführungsformen ist der Prüfkörper 1 nicht vorgespannt, d.h. er wird nicht durch die Seilanordnung aus seiner Nulllage gebracht. In anderen Worten heben sich dann in der Ausgangslage die durch die opponierenden Seilabschnitte wirkenden Kräfte gegenseitig auf, und das Seil beginnt erst auf den Prüfkörper zu wirken, wenn eine Auslenkung stattfindet. Der Prüfkörper kann aber in möglichen Ausführungsformen auch eine Vorspannung in die Schlagrichtung und/oder in die Schwenkrichtung durch die Seilanordnung erfahren.

Figuren 2 und 3 zeigen einen Schnitt durch eine Ausführung der Prüfanordnung, die eine Spannvorrichtung und eine beweglichen Masse aufweist. Sie ist mit besonderem Vorteil bei einer uniaxialen Prüfung in die horizontale Schwenkrichtung einsetzbar.

Dabei greifen, vom Prüfkörper aus betrachtet hinter den Umlenkrollen 13A, 13B, die Spannvorrichtung 18A sowie eine bewegliche Masse 6 an dem Seil an.

Die Spannvorrichtung 18A ist eingerichtet zum Spannen des ersten und des zweiten Seilabschnitts und greift in einen zwischen der ersten und der zweiten Umlenkrolle liegenden dritten Seilabschnitt ein, wobei dieser dritte Seilabschnitt vom Prüfkörper aus gesehen hinter den beiden Umlenkrollen 13A, 13B liegt. Diese Spannvorrichtung umfasst einen Spannaktuator 5C, der am Boden 3 verankert ist und das Seil nach oben strafft, sowie eine Mehrzahl weiterer Umlenkrollen 13C, 13D, 13E, die das Seil über den Spannaktuator 5C führen.

Bei einer Verwendung des Systems aus Figuren 2 und 3 wird also beispielsweise der Prüfkörper nur mittels des Horizontalaktuators 5B ausgelenkt, wobei durch die Spannvorrichtung 18A der erste und der zweite Seilabschnitt gespannt werden. Wenn eine uniaxiale Prüfung in Schwenkrichtung vorgesehen ist kann auf den Vertikalaktuator verzichtet werden.

In der in Figuren 2 und 3 gezeigten Ausführung ist zudem, wie erwähnt, die bewegliche Masse 6 mit dem Seil 12 verbunden, die bei einer horizontalen Auslenkung des Prüfkörpers in Bewegung versetzt wird. Die bewegliche Masse lagert dabei auf einem Ende eines Hebelarms 9B, der an einer von der Masse 6 beabstandeten Stelle über ein Scharnier 10F schwenkbar mit dem Boden verbunden ist. An einem der Masse 6 entgegengesetzten Ende des Hebelarms 9B ist ein Winkelbalken 16C mit dem Hebelarm 9B verbunden, der mit dem Hebelarm 9B bspw. einen Winkel von 110°-120° einschließt. Der Winkelbalken 16C greift an einem Verbindungspunkt 15 z.B. über eine Seilklemme am Seil 12 an. Durch die Masse 6, auf die die Gewichtskraft wirkt, wird eine Vorbelastung auf das Seil eingebracht.

Bei einer horizontalen Bewegung des Prüfkörpers, etwa in die positive y-Richtung (in Schwenkrichtung des Rotorblatts), wie in Figuren 2 und 3 dargestellt, verfährt der Verbindungspunkt 15 auf einem kreisförmigen Verfahrpfad 17. Dabei wird die Masse 6 in Bewegung versetzt, wodurch Trägheitskräfte entstehen, die über den Winkelbalken und das Seil auf den Prüfkörper übertragen werden.

Der Winkelbalken 16C ist in der unausgelenkten Ausgangslage vorzugsweise etwa im 90°-Winkel zum Seil 12 ausgerichtet. Durch die Wahl eines langen Winkelbalkens 16C wird der Radius des Verfahrpfades 17 vergrößert, so dass er sich der linearen Seilstrecke von 13A nach 13E annähert.

Der Spannaktuator 5C wird bspw. so eingestellt oder geregelt, dass das Seil 12 bei einer zyklischen Horizontalanregung über eine gesamte Schwingungsperiode während einer dynamischen Anregung des Prüfkörpers in oder nahe seiner Systemeigenfrequenz in Schwenkrichtung über einer definierten Mindestzugvorspannung bleibt. Damit kann verhindert werden, dass das Seil nie an irgendeiner Stelle schlaff wird oder durchhängt. Fig. 2 zeigt den unausgelenkten und Fig. 3 den entsprechend in Schwenkrichtung ausgelenkten Zustand des Prüfkörpers. Zu erkennen ist dort, dass das Seil am Verbindungspunkt 15 entlang des Verfahrpfades 17 umgelenkt und zwischen 13A und 13E gelängt wird. Diese Seil-Längung, kann mit einem aktiven Seillängen-Ausgleichelement, bspw. dem Aktuator 5C, ausgeglichen werden. Dies macht sich in der in der Figur sichtbaren Verringerung des Hubs deutlich.

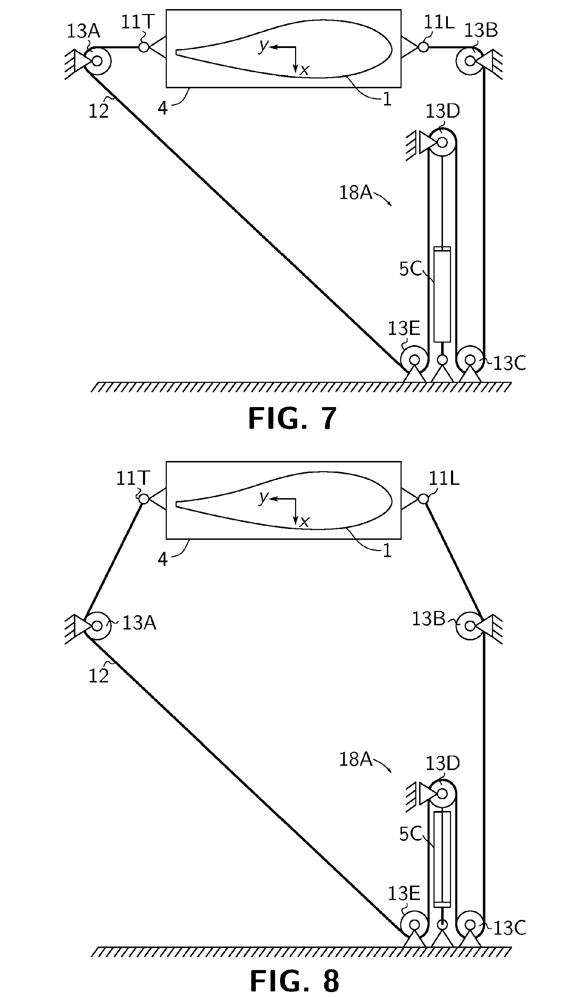

Auch bei vorgesehener uniaxialer horizontaler Anregung kann es zu einer Auslenkung des Prüfkörpers in die vertikale Richtung kommen. Beim Auslenken des Prüfkörpers 1 in eine Richtung mit einer vertikalen Richtungskomponente wird ein Zug auf den ersten Seilabschnitt und den zweiten Seilabschnitt ausgeübt, wenn der erste und der zweite Seilabschnitt mit dem Prüfkörper verbunden sind, wobei durch die mindestens eine Spannvorrichtung 18A der erste und der zweite Seilabschnitt gespannt sind. Durch diese Spannung kann eine Rückstellkraft auf den Prüfkörper ausgeübt werden, die durch den Abstand zwischen den Umlenkrollen 13A und 13B einstellbar ist. Etwa wird in der Anordnung aus Figuren 2 und 3 ein verhältnismäßig großer Abstand zwischen den Umlenkrollen 13A und 13B gewählt, wodurch eine Rückstellkraft beispielsweise gering ist oder insbesondere für geringfügige vertikale Auslenkungen nahezu ausgeschaltet wird. Im Gegensatz dazu wird in Figuren 7 und 8 ein geringer Abstand gewählt, wodurch eine starke Rückstellkraft bereitgestellt werden kann. Dies wird auch später noch ausführlicher mit Bezug auf die Figuren 7 und 8 beschrieben.

Durch die Anordnung aus Figuren 2 und 3 können also die Trägheitskräfte, die mittels der schwingenden Masse 6 bereitgestellt werden, für eine horizontale Auslenkung in Schwenkrichtung gezielt eingebracht werden. Die Vorrichtung eignet sich damit besonders für eine uniaxiale Prüfung in Schwenkrichtung. Dabei können durch große Seillängen zwischen der ersten Umlenkrolle 13A und dem Angriffspunkt 11T, sowie zwischen der zweiten Umlenkrolle 13B und dem Angriffspunkt 11L bei eventuell auftretenden Auslenkungen mit Schlagrichtungsanteil parasitäre vertikale Rückstellkräfte minimiert werden, wenn diese im Versuch nicht gewünscht sind.

Figuren 4 und 5 beziehen sich auf weitere mögliche Ausführungsformen der oben erwähnten beweglichen Masse 6. Diese Alternativen kommen, ebenso wie die bewegliche Masse aus Figuren 2-3 beispielsweise bei Vorrichtungen zum Einsatz, bei denen der erste und der zweite Seilabschnitt derart miteinander verbunden sind, dass sie als ein Seil wirken, d.h., bei denen das mindestens eine Seil 12 ein erstes Seil 12 umfasst und sowohl der erste Seilabschnitt als auch der zweite Seilabschnitt Abschnitte dieses ersten Seils 12 sind, so dass das erste Seil 12 über die erste Umlenkrolle 13A und die zweite Umlenkrolle 13B geführt ist und mit dem ersten und dem zweiten Angriffspunkt verbindbar ist, oder bei denen mindestens das eine Seil 12 ein erstes Seil 12 und ein zweites Seil 12A umfasst, wobei der erste Seilabschnitt ein Abschnitt des ersten Seils 12 ist und der zweite Seilabschnitt ein Abschnitt des zweiten Seils 12A ist, wobei das erste und das zweite Seil miteinander verbunden sind.

Dabei wird in der Regel das Seil oder die zwei Seile derart eingerichtet, dass es vom ersten seitlichen Angriffspunkt zur ersten Umlenkrolle 13 läuft, vom Prüfkörper 1 aus gesehen nach der ersten Umlenkrolle die bewegliche Masse 6 und die Spannvorrichtung 18 an dem mindestens einen Seil 12 angreifen, das mindestens eine Seil nach der beweglichen Masse 6 und der Spannvorrichtung 18 zur zweiten Umlenkrolle 13A läuft und von der zweiten Umlenkrolle (13B) zu dem zweiten seitlichen Angriffspunkt läuft.

In den Figuren 4 und 5 ist nun lediglich ein Seilausschnitt, der zwischen der ersten Umlenkrolle 13A und der Spannvorrichtung 18A liegt, gezeigt.

Fig. 4 zeigt eine Vorrichtung bei der zwei bewegliche Massen 6, 6' mittels eines Scharniers 10F schwingbar gelagert sind. Sie sind an entgegengesetzten Enden eines Balkens gelagert, der so einen doppelten Hebelarm 9B, einmal rechts vom Scharnier 10F, und einmal links vom Scharnier 10F, ausbildet. Dadurch können die Massen 6, 6' so eingerichtet sein, dass sie in der gezeigten Ausgangslage im Gleichgewicht sind und somit keine konstante Vorbelastung durch Gewichtskräfte über das Seil in die Schwenkrichtung des Prüfkörpers bewirken, im Unterschied zu der Anordnung aus Figuren 2 und 3. Über einen am Hebelarm-Balken 9B befestigten Winkelbalken 16C sind die Massen 6, 6' mit dem mindestens einen Seil 12 verbunden. Wenn der Prüfkörper z.B. zyklisch horizontal ausgelenkt wird, wirken die beiden beweglichen Massen 6, 6' als träge Massen.

Fig. 5 zeigt eine Anordnung einer beweglichen Masse, bei der die bewegliche Masse 6 längs zu dem mindestens einen Seil 12 verschiebbar gelagert ist. Sie ist dabei auf Rollen auf einer Schräge gelagert (kann aber bspw. auch auf Kufen oder Schienen o.ä. gelagert sein). Die Masse 6 sitzt dabei auf einem Schlitten 22, der zwischen zwei Seilen befestigt ist, so dass diese zwei Seile als ein einzelnes Seil wirken.

Dabei ist die bewegliche Masse 6 derart angeordnet ist, dass sie bei einem Auslenken des Prüfkörpers in eine Richtung mit einer Komponente längs zum Seil, also mit einer horizontalen Komponente, welches einen asymmetrischen Zug am ersten Seilabschnitt und zweiten Seilabschnitt bewirkt (bspw. nur an einem der Seilabschnitte einen Zug bewirkt), eine Bewegung erfährt. Aufgrund der schrägen Anordnung der beweglichen Masse 6 wirkt zusätzlich eine Komponente der Gewichtskraft der beweglichen Masse 6 auf das Seil, wodurch ein statischer Zug am ersten oder zweiten seitlichen Angriffspunkt bewirkt wird, durch den der Prüfkörper eine konstante Auslenkung in Richtung des Zuges erfahren kann.

Fig. 6 zeigt eine weitere Konfiguration einer beweglichen Masse 6. Hier ist zum besseren Verständnis wieder der gesamte Schnitt durch die Anordnung, ähnlich wie in Figuren 2-3 gezeigt. Die Anordnung ähnelt derjenigen aus Figur 5, da auch hier das mindestens eine Seil 12 ein erstes Seil und ein zweites Seil umfasst, wobei der erste Seilabschnitt ein Abschnitt des ersten Seils ist und der zweite Seilabschnitt ein Abschnitt des zweiten Seils ist, wobei das erste und das zweite Seil über den Schlitten 22, der die bewegliche Masse 6 trägt, miteinander verbunden sind. Auch hier ist die bewegliche Masse 6 längs zu dem mindestens einen Seil 12 verschiebbar auf Rollen (alternativ Kufen, Schienen etc.) gelagert und erfährt bei einem Auslenken des Prüfkörpers in eine Richtung mit einer Komponente längs zum Seil (zum Beispiel mit einer horizontalen Komponente) eine Bewegung. Dabei ist die bewegliche Masse 6 aber als horizontal verfahrbare Massen ausgebildet die unterstützend gelagert ist, so dass eine auf die beweglichen Masse 6 wirkende Gewichtskraft keinen Zug am ersten oder zweiten seitlichen Angriffspunkt bewirkt. Bspw. kann die Anordnung auf derartige bewegliche Massen 6 beschränkt sein, um wie in Fig. 4 jeglichen Zug in Ruheposition zu vermeiden. Um den Schlitten 22 horizontal verfahrbar anordnen zu können, wird in dem Beispiel eine zusätzliche Umlenkrolle 13C' vorgesehen, um das Seil auf die Höhe der Umlenkrolle 13E der Spannvorrichtung 18A zu bringen.

Figuren 7 und 8 zeigen eine weitere Schnittansicht einer möglichen Anordnung, die Vorteilhaft für eine uniaxiale Prüfung in Schlagrichtung (vertikale Auslenkung) verwendet werden kann. Dabei greift die Spannvorrichtung 18A ohne zusätzliche bewegliche Massen 6 zwischen der ersten Umlenkrolle 13A und der zweiten Umlenkrolle 13B am Seil an. Durch die Verformung des Prüfkörpers 1 in Schlagrichtung werden die Seilangriffswinkel an den Befestigungspunkten bzw. Gelenken 11T, 11L verändert, wodurch eine Rückstellkraft entgegen der Schlagverformung resultiert. Der Abstand wird zwischen erster Umlenkrolle 13A und erstem Gelenk 11T bzw. zwischen zweiter Umlenkrolle 13B und zweitem Gelenk 11L möglichst gering gewählt (oder es wird bei größerem Abstand die Seilkraft erhöht), so dass schon bei kleinen Schlag-Verformungen die Kraft des Seils hauptsächlich in Schlagrichtung x wirkt und die Seilkraftkomponente in Schwenkrichtung y minimiert wird. Um die Längung des Seils bei großen Auslenkung des Prüfkörpers auszugleichen, muss das Spannelement große Wege verfahren (wie in Fig. 8 gezeigt). Dabei entspricht der Verfahrweg bei der gezeigten Anordnung etwa der vertikalen Auslenkung des Prüfkörpers. Ohne diesen Verfahrweg würde das Seil sich nicht entsprechend längen können wodurch die Seilspannung und damit die Rückstellkraft zu groß würde und die erforderliche Prüfkörperauslenkung behindert wird und / oder das Seil seine die Belastungsgrenzen überschreitet. Der Spannaktuator 5C muss dabei einen relativ großen Weg verfahren, um die Seilzugspannung aufrecht zu halten, damit der Prüfkörper 1 weit ausgelenkt werden kann (wie in Fig. 8 gezeigt). Dabei regelt der Spannaktuator 5C die wirkende Federkraft (Rückstellkraft). Die Elastizität des Seiles kann bei der Steuerung oder Regelung des Spannaktuators 5C vorteilhaft berücksichtigt werden, und kann insbesondere auch vorteilhaft für eine Federwirkung genutzt werden, wodurch weniger Hub im Aktuator 5C erforderlich sein kann.

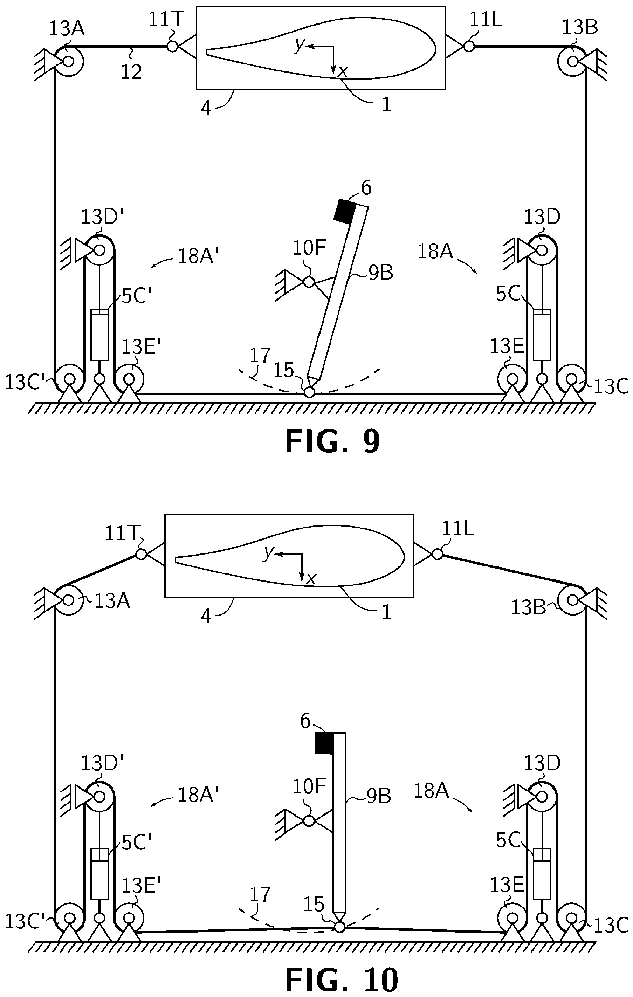

Figuren 9 und 10 zeigen eine Ausführung der Prüfanordnung mit zwei Spannvorrichtungen 18A, 18A' und einer beweglichen Masse 6, die besonders für eine biaxiale Anregung geeignet ist. Ähnlich wie im Fall der Figuren 2 und 3 wird die bewegliche Masse 6 beispielhaft an einem Hebelarm 9B befestigt, der durch ein Scharnier 10F schwenkbar gelagert ist. Zwei gleichartig aufgebaute Spannvorrichtungen 18A, 18A', die beiderseits von der beweglichen Massenanordnung am Seil 12 angreifen, einmal links davon und einmal rechts davon, führen das Seil, ausgehend von den jeweiligen Umlenkrollen 13A, 13B auf gleiche Höhe, so dass es sich horizontal zwischen den beiden Spannvorrichtung 18A, 18A' erstreckt. Das Seil ist also derart eingerichtet, dass es vom ersten seitlichen Angriffspunkt zur ersten Umlenkrolle 13A läuft, vom Prüfkörper 1 aus gesehen nach der ersten Umlenkrolle 13 zunächst die erste Spannvorrichtung 18A' an dem mindestens einen Seil 12 angreift, anschließend die bewegliche Masse 6 an dem Seil 12 angreift, anschließend die zweite Spannvorrichtung 18A an dem Seil 12 angreift und das Seil von der zweiten Spannvorrichtung 18A zur zweiten Umlenkrolle 13B läuft und von der zweiten Umlenkrolle 13B zu dem zweiten seitlichen Angriffspunkt läuft. Der Hebelarm 9B wird mit seinem unteren Ende an einem Verbindungspunkt 15 mit dem Seil verbunden. Die bewegliche Masse 6 sitzt am oberen Ende des Hebelarms 9b. Der Verbindungspunkt bewegt sich bei horizontaler Auslenkung entlang des kreisbogenförmigen Verfahrpfades 17.

Im Gegensatz zu der Anordnung aus Figuren 2 und 3 sind die Umlenkrollen 13A und 13B in der Nähe des Prüfkörpers vorgesehen, so dass in die Seilabschnitte zwischen 13A und 11T sowie zwischen 13B und 11L bei vertikaler Auslenkung des Prüfkörpers 1 ein vergleichsweise starker Winkel eingebracht wird, der in einer signifikanten vertikalen Rückstellkraft resultiert. In der Vorrichtung aus Figuren 9 und 10 kann vorteilhaft, auch etwa durch entsprechende Einstellung des Abstands von der ersten Umlenkrolle 13A zum ersten Gelenk 11T, bzw. des Abstands von der zweiten Umlenkrolle 13B zum zweiten Gelenk 11L eine Minimierung parasitär wirkender Kräfte erreicht werden. Vorteilhaft ist, dass die Bewegung der entkoppelten beweglichen Masse 6 nicht durch Bewegungen des Prüfkörpers in Schlagrichtung beeinflusst wird. Dies wird insbesondere durch die zweite Spannvorrichtung 18A' ermöglicht. Die beiden Spannvorrichtungen 18A, 18A' gleichen die Längenänderung des Seils symmetrisch aus, wobei sich der Weg bzw. die Längung auf beide Spannaktuatoren 5C, 5C' aufteilt.

Die Vorrichtung kann bspw. derart eingerichtet sein, dass sich der Prüfkörper 1 in einem unausgelenkten Zustand durch eine Verbindungslinie von der ersten Umlenkrolle 13A zur zweiten Umlenkrolle 13B erstreckt, so dass der erste Seilabschnitt und der zweite Seilabschnitt mit dem Prüfkörper 1 derart verbindbar sind, dass ein durch den ersten Seilabschnitt vermittelter Zug und ein durch den zweiten Seilabschnitt vermittelter Zug in entgegengesetzte Richtungen, insbesondere in genau entgegengesetzte Richtungen, wirken.

Es ist aber auch möglich, dass sich der Prüfkörper 1 in einem unausgelenkten Zustand außerhalb einer Verbindungslinie von der ersten Umlenkrolle 13A zur zweiten Umlenkrolle 13B erstreckt, so dass der erste Seilabschnitt und der zweite Seilabschnitt mit dem Prüfkörper 1 derart verbunden sind, dass ein durch den ersten Seilabschnitt vermittelter Zug und ein durch den zweiten Seilabschnitt vermittelter Zug eine Vorspannung, insbesondere in eine Richtung mit einer vertikalen Richtungskomponente, auf den unausgelenkten Prüfkörper 1 ausüben.

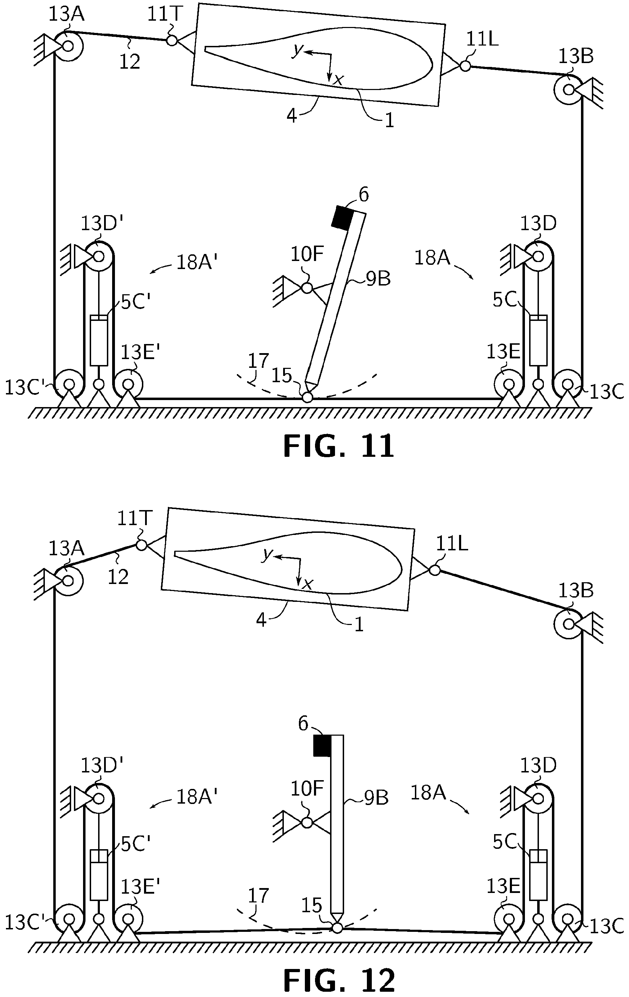

In den Fällen der vorangehenden Figuren waren die Umlenkrollen 13A und 13B auf gleicher Höhe gezeigt. Es ist aber auch möglich, die Umlenkrollen 13A, 13B auf unterschiedlichen Höhen zu montieren, wie in Figuren 11 und 12 gezeigt. Die Vorrichtung entspricht beispielhaft ansonsten derjenigen aus den Figuren 9 und 10.

Diese Anordnung kann dazu verwendet werden, die Vorrichtung so einzurichten, dass sich der Prüfkörper 1 in einem unausgelenkten Zustand durch eine Verbindungslinie von der ersten Umlenkrolle 13A zur zweiten Umlenkrolle 13B erstreckt, so dass der erste Seilabschnitt und der zweite Seilabschnitt mit dem Prüfkörper 1 derart verbindbar sind, dass ein durch den ersten Seilabschnitt vermittelter Zug und ein durch den zweiten Seilabschnitt vermittelter Zug in genau entgegengesetzte Richtungen wirken, wobei dieser Zug entlang der Schwenkrichtung wirken kann, die bspw. nicht genau einer horizontalen Richtung entspricht. Dadurch kann auf die Blatteigenschaften und Blattgeometrie am Ort des Lastrahmens 4 eingegangen werden, wobei durch Höhenpositionierung der beiden Umlenkrollen 13A, 13B eine entsprechende Einstellung vorgenommen werden kann, die der gewünschten Lasteinleitung Rechnung trägt.

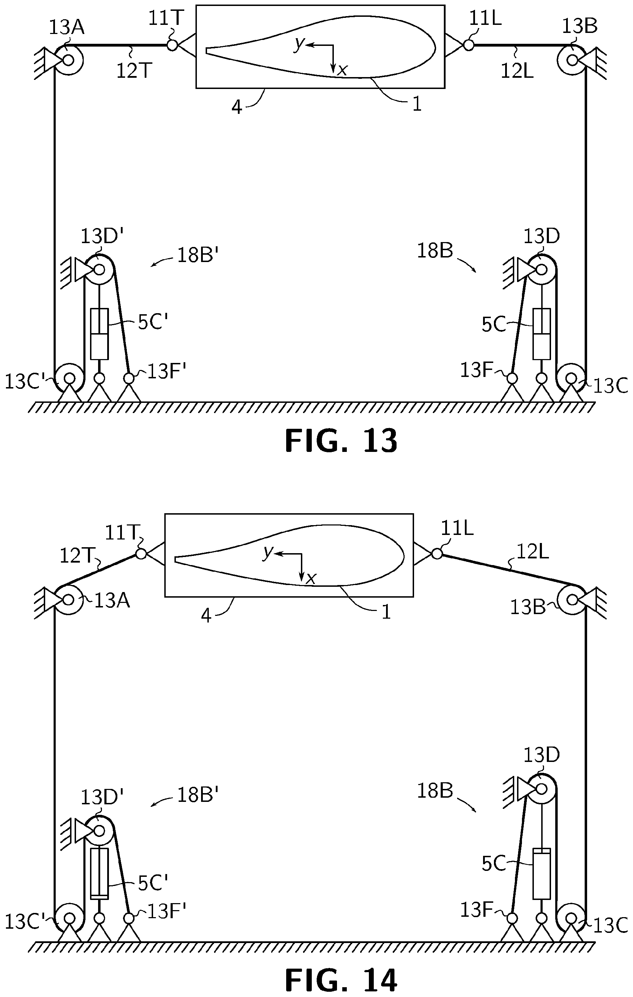

Figuren 13 und 14 zeigen einen Schnitt durch eine weitere mögliche Anordnung, die in der Vorrichtung zum Prüfen eines länglichen Prüfkörpers 1 zum Einsatz kommen kann. Sie unterscheidet sich von den vorherigen Anordnungen dadurch, dass das mindestens eine Seil ein erstes Seil 12T und ein zweites Seil 12L umfasst, wobei der erste Seilabschnitt ein Abschnitt des ersten Seils 12T ist, so dass das erste Seil 12T mit dem ersten Angriffspunkt verbunden ist, und der zweite Seilabschnitt ein Abschnitt des zweiten Seils 12L ist, so dass das zweite Seil 12L mit dem zweiten Angriffspunkt verbunden ist. Die Vorrichtung weist dabei eine erste Seilfixierung 13F auf zum Befestigen des ersten Seils 12T und eine zweite Seilfixierung 13F zum Befestigen des zweiten Seils 12L. Dadurch werden also zwei getrennte und getrennt wirkende Seile zur Verfügung gestellt. Die mindestens eine Spannvorrichtung 18 umfasst eine erste Spannvorrichtung 18B' und eine zweite Spannvorrichtung 18B. Die erste Spannvorrichtung 18B' greift zwischen der ersten Umlenkrolle 13A und der ersten Seilfixierung 13F' an dem ersten Seil 12T an und kann so das erste Seil 12T spannen. Die zweite Spannvorrichtung 18B greift zwischen der zweiten Umlenkrolle 13B und der zweiten Seilfixierung 13F an dem zweiten Seil 12L an und kann das zweite Seil 12L spannen.

Durch die Anordnung wird bei uniaxialer oder biaxialer Anregung eine Kontrolle ermöglicht. Bspw. kann durch Steuerung oder Regelung der Spannaktuatoren 5C, 5C' die Krafteinleitung für die Schwenkrichtung aktiv gesteuert werden ("aktive Masse"), wodurch eine Wirkung ähnlich der der entkoppelten Masse simuliert werden kann, aber auch die Rückstellkraft für die Schlagrichtung lässt sich einstellen und regeln. Durch den Einsatz von Reglern können insbesondere Kraftamplitude und Einwirkungszeitpunkt eingestellt werden.

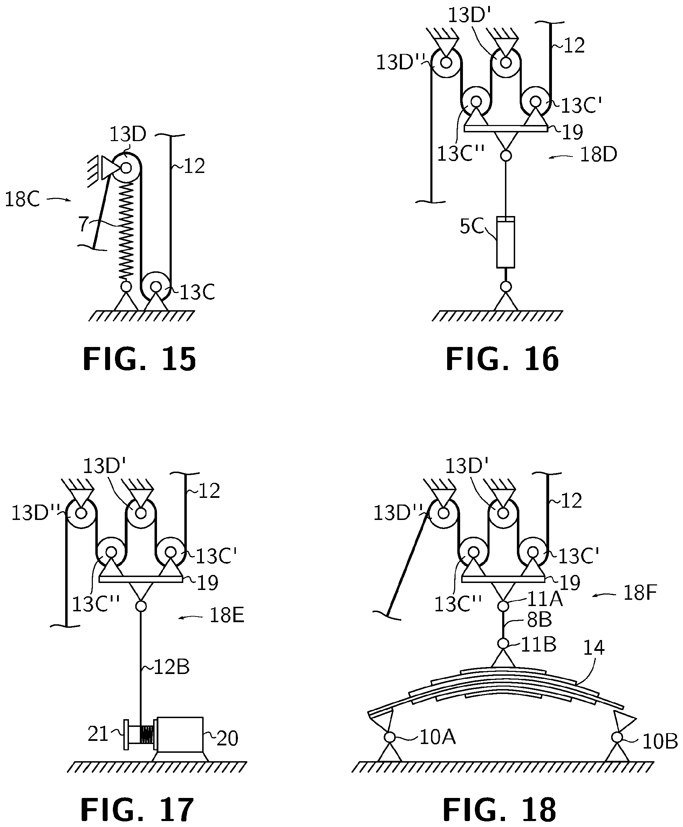

Figuren 15 bis 18 zeigen mögliche Ausführungsformen der Spannvorrichtungen. Vorangehend waren Spannvorrichtungen 18A, 18A', 18B, 18B' gezeigt, die jeweils einen Spannaktuator und Umlenkrollen umfassen. In sämtlichen Ausführungen können alternativ oder zusätzlich auch die Spannvorrichtungen aus den Figuren 15 bis 18 zum Einsatz kommen.

Figur 15 zeigt eine Spannvorrichtung 18C, bei der im Wesentlichen der Spannaktuator 5C durch eine Zug-Druckfeder 7 ersetzt wird. Diese Ausgestaltung kann vorteilhaft sein für eine reine Aufrechterhaltung einer Mindestzugvorspannung sowie zum Wegausgleich wie bspw. im Zusammenhang mit Figuren 2 und 3 diskutiert.

Figur 16, zeigt eine Spannvorrichtung 18D, bei der ein Spannaktuator 5C mit einer Flaschenzuganordnung verbunden ist. Die Flaschenzuganordnung umfasst hier vier Umlenkrollen 13C', 13D', 13C", 13D", von denen zwei Umlenkrollen 13C', 13C" an einer mit dem Spannaktuator 5C verbundenen Traverse 19 befestigt sind. Natürlich sind auch weniger oder mehr als vier Umlenkrollen möglich. So wird ein Zylinderweg des Spannaktuators je nach Anzahl der Umlenkungen halbiert, gedrittelt, geviertelt, etc. (im gezeigten Beispiel halbiert). Dies kann Bauraum und Energie sparen, bspw. wenn ein Hydraulikaktuator verwendet wird.

FIG. 17 zeigt eine Ausführung, bei der die Spannvorrichtung 18E ein Seil 12B und eine Seilwinde 21 mit einem Motor 20 umfasst. Der Motor 20 kann ein Elektromotor sein und bspw. ein Getriebe aufweisen. Das Seil ist mit einer Traverse 19 eines Flaschenzugs verbunden (siehe die Erläuterungen zur Figur 16). Der Motor kann geregelt werden, um die gewünschte Spannung über das Seil 12B der Seilwindenkonstruktion in das mindestens eine Seil 12 der Prüfanordnung zu übertragen.

Figur 18 zeigt eine Spannvorrichtung 18F, bei der eine Traverse 19 eines Flaschenzugs (vgl. wieder Fig. 16) mit einer vorgespannten Blattfeder 14 verbunden ist. Dadurch wird das Seil 12 der Prüfanordnung unter Zug vorgespannt. Zu diesem Zweck wird die Blattfeder so eingerichtet, dass sie während des Betriebs dauerhaft unter Zug ausgelenkt bleibt. Dank des durch den Flaschenzug verkürzten Wegs kann diese Blattfeder verhältnismäßig kompakt ausgelegt werden, d.h. sie ist kürzer, was zu verringerter Masse (die der Federwirkung entgegengesetzt wirkt) und zu geringerem Materialeinsatz und somit zu verringerten Kosten führt.

### Bezugszeichenliste

- 1: Prüfkörper
- 1': Einspannstelle
- 2: Einspannvorrichtung
- 3: Boden
- 4: Lastrahmen
- 5A: Vertikalaktuator
- 5B: Horizontalaktuator
- 5C: Spannaktuator
- 6: Masse
- 7: Feder
- 8: Stange
- 9: Hebelarm
- 10: Scharnier
- 11: Gelenk
- 12: Seil
- 13A: Erste Umlenkrolle
- 13B: Zweite Umlenkrolle
- 13F': Erste Seilfixierung
- 13F': Zweite Seilfixierung
- 14: Blattfeder
- 15: Verbindungspunkt
- 16: Winkelbalken
- 17: Verfahrpfad
- 18: Spannvorrichtung
- 19: Traverse
- 20: Motor
- 21: Seilwinde
- 22: Schlitten

## Patentansprüche

1. Vorrichtung zum Prüfen eines länglichen Prüfkörpers (1), umfassend
eine Einspannvorrichtung (2) zum Einspannen des Prüfkörpers (1), so dass dieser sich von der Einspannvorrichtung (2) aus seiner Länge nach in eine Längsrichtung mit einer horizontalen Richtungskomponente erstreckt,
mindestens einen Aktuator (5A, 5B) zum Auslenken des Prüfkörpers (1) ,
mindestens ein Seil (12),
eine erste Umlenkrolle (13A), die auf einer ersten Seite des Prüfkörpers (1) anordenbar ist, so dass ein erster Seilabschnitt des mindestens einen Seils (12) über die erste Umlenkrolle zu einem ersten, auf der ersten Seite des Prüfkörpers (1) liegenden seitlichen Angriffspunkt (11T) am Prüfkörper (1) oder an einem Lastrahmen (4) für den Prüfkörper (1) führbar und mit dem ersten Angriffspunkt (11T) verbindbar ist,
**gekennzeichnet durch**
eine zweite Umlenkrolle (13B), die auf einer der ersten Seite gegenüberliegenden zweiten Seite des Prüfkörpers (1) anordenbar ist, so dass ein zweiter Seilabschnitt des mindestens einen Seils (12) über die zweite Umlenkrolle (13B) zu einem zweiten, auf der zweiten Seite des Prüfkörpers (1) liegenden seitlichen Angriffspunkt (11L) am Prüfkörper (1) oder an dem Lastrahmen (4) für den Prüfkörper (1) führbar und mit dem zweiten Angriffspunkt (11L) verbindbar ist, wobei der zweite seitliche Angriffspunkt (11L) dem ersten seitlichen Angriffspunkt (11T) entgegengesetzt ist, und
mindestens eine Spannvorrichtung (18) zum Spannen des ersten und des zweiten Seilabschnitts.

2. Vorrichtung nach einem der vorhergehenden Ansprüche, wobei der mindestens eine Aktuator (5A) einen ersten Aktuator (5A) umfasst zum Auslenken des Prüfkörpers (1) in eine erste Auslenkungsrichtung und einen zweiten Aktuator (5B) zum Auslenken des Prüfkörpers (1) in eine zweite Auslenkungsrichtung quer zur ersten Auslenkungsrichtung und/oder wobei der mindestens eine Aktuator (5A, 5B) einen Vertikalaktuator (5A) umfasst zum Auslenken des Prüfkörpers (1) mit einer vertikalen Richtungskomponente, wobei beim Auslenken des Prüfkörpers (1) in diese Richtung ein Zug auf den ersten Seilabschnitt und den zweiten Seilabschnitt ausgeübt wird, wenn der erste und der zweite Seilabschnitt mit dem Prüfkörper (1) verbunden sind, wobei die mindestens eine Spannvorrichtung (18) den ersten und den zweiten Seilabschnitt spannt so dass eine Rückstellkraft auf den ausgelenkten Prüfkörper (1) ausgeübt wird und/oder wobei der mindestens eine Aktuator (5A, 5B) einen Horizontalaktuator (5B) umfasst, zum Auslenken des Prüfkörpers (1) in eine zweite Auslenkungsrichtung mit einer horizontalen Richtungskomponente.

3. Vorrichtung nach einem der vorhergehenden Ansprüche, wobei das mindestens eine Seil (12, 12T, 12L) ein erstes Seil (12T) und ein zweites Seil (12L) umfasst,
wobei der erste Seilabschnitt ein Abschnitt des ersten Seils (12T) ist, so dass das erste Seil (12T) mit dem ersten Angriffspunkt (11T) verbindbar ist und
der zweite Seilabschnitt ein Abschnitt des zweiten Seils (12L) ist, so dass das zweite Seil (12L) mit dem zweiten Angriffspunkt (11L) verbindbar ist,
wobei die Vorrichtung eine erste Seilfixierung (13F) aufweist zum Befestigen des ersten Seils (12T) und eine zweite Seilfixierung (13F) aufweist zum Befestigen des zweiten Seils (12L),
wobei die mindestens eine Spannvorrichtung (18) eine erste Spannvorrichtung (18B') und eine zweite Spannvorrichtung (18B) umfasst, wobei die erste Spannvorrichtung (18B') zwischen der ersten Umlenkrolle (13A) und der ersten Seilfixierung (13F') an dem ersten Seil (12T) angreift und die zweite Spannvorrichtung (18B) zwischen der zweiten Umlenkrolle (13B) und der zweiten Seilfixierung (13F) an dem zweiten Seil (12L) angreift.

4. Vorrichtung nach einem der Ansprüche 1 oder 2,
wobei das mindestens eine Seil (12) ein erstes Seil (12) umfasst und sowohl der erste Seilabschnitt als auch der zweite Seilabschnitt Abschnitte dieses ersten Seils (12) sind, so dass das erste Seil (12) über die erste Umlenkrolle (13A) und die zweite Umlenkrolle (13B) geführt ist und mit dem ersten Angriffspunkt (11T) und dem zweiten Angriffspunkt (11L) verbindbar ist, oder
wobei das mindestens eine Seil (12) ein erstes Seil (12) und ein zweites Seil (12A) umfasst, wobei der erste Seilabschnitt ein Abschnitt des ersten Seils (12) ist und der zweite Seilabschnitt ein Abschnitt des zweiten Seils (12A) ist, wobei das erste und das zweite Seil miteinander verbunden sind.

5. Vorrichtung nach Anspruch 4, wobei das mindestens eine Seil (12) mit mindestens einer beweglichen Masse (6) verbunden ist, wobei die mindestens eine bewegliche Masse (6) insbesondere mittels eines Scharniers (10) schwingbar gelagert ist und/oder über einen Hebelarm (9) und/oder einen Winkelbalken (16) mit dem mindestens einen Seil (12) verbunden ist und/oder wobei die mindestens eine bewegliche Masse (6) insbesondere längs zu dem mindestens einen Seil (12) verschiebbar gelagert ist, insbesondere auf Rollen oder Kufen oder Schienen, beispielsweise auf einer Schräge und/oder, wobei die bewegliche Masse (6) insbesondere derart angeordnet ist, dass sie bei einem Auslenken des Prüfkörpers in eine Richtung mit einer Komponente längs zum Seil, zum Beispiel mit einer horizontalen Komponente, welches einen asymmetrischen Zug am ersten Seilabschnitt und zweiten Seilabschnitt bewirkt, eine Bewegung erfährt.

6. Vorrichtung nach Anspruch 5, wobei die bewegliche Masse (6) so angeordnet ist, dass eine Gewichtskraft auf die bewegliche Masse (6) wirkt, durch die ein statischer Zug am ersten Angriffspunkt (11T) oder am zweiten seitlichen Angriffspunkt (11L) bewirkt wird, durch den der Prüfkörper (1) eine konstante Auslenkung in Richtung des Zuges erfährt und/oder wobei die bewegliche Masse (6) eine oder mehrere horizontal verfahrbare Massen umfasst und/oder eine oder mehrere Massen umfasst, die unterstützend gelagert ist/sind, so dass eine auf die bewegliche(n) Masse(n) (6) wirkende Gewichtskraft keinen Zug am ersten seitlichen Angriffspunkt (11T) oder am zweiten seitlichen Angriffspunkt (11L) bewirkt, wobei die bewegliche Masse (6) beispielsweise auf eine oder mehrere derartige Massen beschränkt ist.

7. Vorrichtung nach einem der Ansprüche 5 bis 6, wobei das mindestens eine Seil derart eingerichtet ist, dass es vom ersten seitlichen Angriffspunkt (11T) zur ersten Umlenkrolle (13A) läuft, vom Prüfkörper (1) aus gesehen nach der ersten Umlenkrolle (13A) die bewegliche Masse (6) und die Spannvorrichtung (18) an dem mindestens einen Seil (12) angreifen, das mindestens eine Seil (12) nach der beweglichen Masse (6) und der Spannvorrichtung (18) zur zweiten Umlenkrolle (13B) läuft und von der zweiten Umlenkrolle (13B) zu dem zweiten seitlichen Angriffspunkt (11L) läuft.

8. Vorrichtung nach einem der Ansprüche 5 bis 7, eine erste Spannvorrichtung (18A') und eine zweite Spannvorrichtung (18A) umfassend, wobei das mindestens eine Seil (12) derart eingerichtet ist, dass es vom ersten seitlichen Angriffspunkt (11T) zur ersten Umlenkrolle (13A) läuft, vom Prüfkörper (1) aus gesehen nach der ersten Umlenkrolle (13A) zunächst die erste Spannvorrichtung (18A') an dem mindestens einen Seil (12) angreift, anschließend die mindestens eine bewegliche Masse (6) an dem mindestens einen Seil (12) angreift, anschließend die zweite Spannvorrichtung (18A) an dem mindestens einen Seil (12) angreift und das Seil von der zweiten Spannvorrichtung (18A) zur zweiten Umlenkrolle (13B) läuft und von der zweiten Umlenkrolle (13B) zu dem zweiten seitlichen Angriffspunkt (11L) läuft.

9. Vorrichtung nach einem der vorhergehenden Ansprüche, wobei die mindestens eine Spannvorrichtung (18) einen Spannaktuator (5C, 5C'), insbesondere in Form eines elektrischen, hydraulischen oder pneumatischen Aktuators, aufweist und/oder einen Motor (20) und/oder eine Seilwinde (21) und/oder eine Feder (7) und/oder eine Blattfeder (14) und/oder einen oder mehrere Umlenkrollen und/oder einen Flaschenzug und/oder wobei die Spannvorrichtung (18) als aktive Spannvorrichtung ausgestaltet ist, die einen Motor und/oder einen Aktuator umfasst, wobei der Motor und/oder der Aktuator steuerbar und/oder regelbar ist.

10. Vorrichtung nach einem der vorhergehenden Ansprüche, wobei die erste Umlenkrolle (13A) und die zweite Umlenkrolle (13B) auf gleicher Höhe angeordnet sind.

11. Vorrichtung nach einem der vorhergehenden Ansprüche, derart eingerichtet, dass sich der Prüfkörper (1) in einem unausgelenkten Zustand durch eine Verbindungslinie von der ersten Umlenkrolle (13A) zur zweiten Umlenkrolle (13B) erstreckt, so dass der erste Seilabschnitt und der zweite Seilabschnitt mit dem Prüfkörper (1) derart verbindbar sind, dass ein durch den ersten Seilabschnitt vermittelter Zug und ein durch den zweiten Seilabschnitt vermittelter Zug in entgegengesetzte Richtungen, insbesondere in genau entgegengesetzte Richtungen, wirken.

12. Vorrichtung nach einem der Ansprüche 1-10, derart eingerichtet, dass sich der Prüfkörper (1) in einem unausgelenkten Zustand außerhalb einer Verbindungslinie von der ersten Umlenkrolle (13A) zur zweiten Umlenkrolle (13B) erstreckt, so dass der erste Seilabschnitt und der zweite Seilabschnitt mit dem Prüfkörper (1) derart verbindbar sind, dass ein durch den ersten Seilabschnitt vermittelter Zug und ein durch den zweiten Seilabschnitt vermittelter Zug eine Vorspannung, insbesondere in eine Richtung mit einer vertikalen Richtungskomponente, auf den unausgelenkten Prüfkörper (1) ausüben.

13. System zum Prüfen eines länglichen Prüfkörpers (1), umfassend die Vorrichtung nach einem der vorhergehenden Ansprüche sowie den Prüfkörper (1), wobei der Prüfkörper (1) in die Einspannvorrichtung (2) eingespannt ist, so dass er sich von der Einspannvorrichtung (2) aus seiner Länge nach in die Längsrichtung mit der horizontalen Richtungskomponente erstreckt, wobei der erste Seilabschnitt mit dem ersten seitlichen Angriffspunkt (11T) verbunden ist und der zweite Seilabschnitt mit dem zweiten Angriffspunkt (11L) verbunden ist.

14. Verfahren zum Prüfen eines länglichen Prüfkörpers (1) unter Verwendung eines Systems nach Anspruch 13, wobei der Prüfkörper (1) mittels des mindestens einen Aktuators (5A) ausgelenkt wird und mittels der mindestens einen Spannvorrichtung (18) der erste und der zweite Seilabschnitt gespannt werden, wobei insbesondere der Prüfkörper (1) in eine Richtung mit einer vertikalen Richtungskomponente ausgelenkt wird, so dass durch das mindestens eine Seil eine Rückstellkraft auf den vertikal ausgelenkten Prüfkörper (1) ausgeübt wird.

15. Verfahren nach Anspruch 14, wobei der Prüfkörper (1) in eine Richtung mit einer horizontalen Richtungskomponente ausgelenkt wird, und das mindestens eine Seil die horizontale Auslenkung toleriert und in Reaktion auf die Auslenkung über die erste und die zweite Umlenkrolle (13A, 13B) läuft, wobei die Auslenkung beispielsweise durch mindestens eine mit dem mindestens einen Seil (12) verbundene bewegliche Masse (6) beeinflusst wird.

## Claims

1. A device to test an elongated test specimen (1), comprising
a clamping device (2) to clamp the test specimen (1) such that it extends with a horizontal directional component lengthwise from the clamping device (2) in a longitudinal direction,
at least one actuator (5A, 5B) to deflect the test specimen (1),
at least one cable (12),
a first deflection roller (13A), which can be arranged on a first side of the test specimen (1), so that a first cable section of the at least one cable (12) can be guided over the first deflection roller to a first lateral point of application (11T) on the test specimen (1), located on the first side of the test specimen (1), or on a load frame (4) for the test specimen (1) and connected to the first point of application (11T),
**characterized by**
a second deflection roller (13B) which can be arranged on a second side of the test specimen (1) opposite the first side, so that a second cable section of the at least one cable (12) can be guided over the second deflection roller (13B) to a second lateral point of application (11L) on the test specimen (1), located on the second side of the test specimen (1), or on the load frame (4) for the test specimen (1) and can be connected to the second point of application (11L), the second lateral point of application (11L) being opposite the first lateral point of application (11T), and
at least one tensioning device (18) to tension the first and second cable sections.

2. The device according to any of the preceding claims, wherein the at least one actuator (5A) comprises a first actuator (5A) to deflect the test specimen (1) in a first deflection orientation and a second actuator (5B) to deflect the test specimen (1) in a second deflection orientation perpendicular to the first deflection orientation and/or wherein the at least one actuator (5A, 5B) comprises a vertical actuator (5A) to deflect the test specimen (1) with a vertical directional component,wherein, when the test specimen (1) is being deflected in this direction, tension is exerted on the first cable section and the second cable section if the first and the second cable section are connected to the test specimen (1) with the at least one tensioning device (18) tensioning the first and the second cable section such that a restoring force is exerted on the deflected test specimen (1)and/or the at least one actuator (5A, 5B) comprises a horizontal actuator (5B) to deflect the test specimen (1) in a second deflection orientation with a horizontal directional component.

3. The device according to any of the preceding claims, wherein the at least one cable (12, 12T, 12L) comprises a first cable (12T) and a second cable (12L),
the first cable section being a section of the first cable (12T), so that the first cable (12T) can be connected to the first point of application (11T), and
the second cable section being a section of the second cable (12L), so that the second cable (12L) can be connected to the second point of application (11L),
wherein the device has a first cable attachment (13F) to attach the first cable (12T) and a second cable attachment (13F) to attach the second cable (12L),
the at least one tensioning device (18) comprises a first tensioning device (18B') and a second tensioning device (18B), wherein the first tensioning device (18B') engages the first cable (12T) between the first deflection roller (13A) and the first cable attachment (13F') and the second tensioning device (18B) engages the second cable (12L) between the second deflection roller (13B) and the second cable attachment (13F).

4. The device according to any of claim 1 or claim 2,
wherein the at least one cable (12) comprises a first cable (12) and both the first cable section and the second cable section are sections of this first cable (12), so that the first cable (12) can be guided over the first deflection roller (13A) and the second deflection roller (13B) and can be connected to the first point of application (11T) and second point of application (11L), or
wherein the at least one cable (12) comprises a first cable (12) and a second cable (12A), the first cable section being a section of the first cable (12) and the second cable section being a section of the second cable (12A), the first and second cables being connected to each other.

5. The device according to claim 4,
wherein the at least one cable (12) is connected to at least one movable mass (6),wherein the at least one movable mass (6) is pivotally mounted in particular via a hinge (10) and/or is connected to the at least one cable (12) via a lever arm (9) and/or via an angled beam (16) and/or wherein the at least one movable mass (6) is mounted such as to be in particular longitudinally displaceable with respect to the at least one cable (12), in particular on rollers or runners or rails, for example on an inclined surface,and/or wherein the movable mass (6) is in particular arranged to undergo a motion upon deflection of the test specimen in a direction having a component along the cable, for example a horizontal component, which causes an asymmetrical tension on the first cable section and second cable section.

6. The device according to claim 5, the movable mass (6) being arranged such that a weight force acts on the movable mass (6), via which static tension is applied to the first point of application (11T) or to the second lateral point of application (11L), by which the test specimen (1) undergoes a constant deflection towards the tension,and/or wherein the movable mass (6) comprises one or more horizontally movable masses and/or comprises one or more masses supportively mounted, so that a weight force engaging on the movable mass(es) (6) does not cause any tension at the first lateral point of application (11T) or at the second lateral point of application (11L), the movable mass (6) being limited, for example, to one or more such masses.

7. The device according to one of claims 5 to 6, wherein the at least one cable is arranged such that it runs from the first lateral point of application (11T) to the first deflection roller (13A), the movable mass (6) and the tensioning device (18) engage on the at least one cable (12) after the first deflection roller (13A), as seen from the test specimen (1), the at least one cable (12) runs after the movable mass (6) and the tensioning device (18) to the second deflection roller (13B) and from the second deflection roller (13B) to the second lateral point of application (11L).

8. The device according to any one of claims 5 to 7, comprising a first clamping device (18A') and a second clamping device (18A), the at least one cable (12) being configured such that it runs from the first lateral point of application (11) to the first deflection roller (13A), as seen from the test specimen 1, after the first deflection roller (13), the first tensioning device (18A') at first engages the at least one cable (12), then the movable mass (6) engages the at least one cable (12), then the second tensioning device (18A) engages the at least one cable (12) and the cable runs from the second clamping device (18A) to the second deflection roller (13B) and from the second deflection roller (13B) to the second lateral point of application (11L).

9. The device according to any one of the preceding claims, wherein the at least one tensioning device (18) has a tensioning actuator (5C, 5C'), in particular in the form of an electric, hydraulic or pneumatic actuator, and/or a motor (20) and/or a cable winch (21) and/or a spring (7) and/or a leaf spring (14) and/or one or more deflection rollers and/or a pulley,and/or wherein the tensioning device (18) is designed as an active tensioning device comprising a motor and/or an actuator, wherein the motor and/or the actuator is/are controllable and/or adjustable.

10. The device according to any one of the preceding claims, wherein the first deflection roller (13A) and the second deflection roller (13B) are arranged at the same height.

11. The device according to any one of the preceding claims configured such that the test specimen (1) extends in an undeflected state through a connecting line from the first deflection roller (13A) to the second deflection roller (13B), so that the first cable section and the second cable section can be connected to the test specimen (1) such that any tension transmitted by the first cable section and any tension transmitted by the second cable section engage in opposite directions, in particular in exactly opposite directions.

12. The device according to any one of claims 1-10, configured such that the test specimen (1) extends in a non-deflected state outside a line connecting the first deflection roller (13A) to the second deflection roller (13B), such that the first cable section and the second cable section can be connected to the test specimen (1) such that any tension applied by the first cable section and any tension applied by the second cable section exert a prestress, in particular in a direction with a vertical directional component, on the undeflected test specimen (1).

13. A system for testing an elongated test specimen (1), comprising the device according to any one of the preceding claims as well as the test specimen (1), with the test specimen (1) being clamped in the clamping device (2) such that it extends lengthwise from the clamping device (2) in the longitudinal direction with the horizontal directional component, with the first cable section connected to the first lateral point of application (11T) and the second cable section connected to the second point of application (11L).

14. A method for testing an elongated test specimen (1) using a system according to claim 13,
wherein the test specimen (1) is deflected by the at least one actuator (5A) and the first and second cable sections are tensioned by the at least one tensioning device (18), wherein in particular the test specimen (1) is deflected in a direction with a vertical directional component, so that a restoring force is exerted on the vertically deflected test specimen (1) by the at least one cable.

15. The method according to claim 14, wherein the test specimen (1) is deflected in a direction having a horizontal directional component, and the at least one cable tolerates the horizontal deflection and runs over the first and second deflection rollers (13A, 13B) in response to the deflection, wherein the deflection is influenced, for example, by at least one movable mass (6) connected to the at least one cable (12).

## Revendications

1. Dispositif permettant de tester une éprouvette (1) allongée, comprenant
un dispositif d'accrochage (2) permettant d'accrocher l'éprouvette (1) de sorte que ladite éprouvette s'étend à partir du dispositif d'accrochage (2) sur sa longueur dans une direction longitudinale présentant une composante directionnelle horizontale,
au moins un actionneur (5A, 5B) permettant de dévier l'éprouvette (1),
au moins un câble (12),
un premier rouleau de renvoi (13A) qui peut être agencé sur un premier côté de l'éprouvette (1) de sorte qu'une première section de câble du au moins un câble (12) peut être guidée au niveau de l'éprouvette (1) ou au niveau d'un cadre de charge (4) destiné à l'éprouvette (1) par l'intermédiaire du premier rouleau de renvoi jusqu'à un premier latéral point de mise en prise (11T) situé sur le premier côté de l'éprouvette (1) et peut être reliée au premier point de mise en prise (11T),
**caractérisé par**
un second rouleau de renvoi (13B) qui peut être agencé sur un second côté de l'éprouvette (1) opposé au premier côté, de sorte qu'une seconde section de câble du au moins un câble (12) peut être guidée au niveau de l'éprouvette (1) ou au niveau du cadre de charge (4) destiné à l'éprouvette (1) par l'intermédiaire du second rouleau de renvoi (13B) jusqu'à un second point latéral de mise en prise (11L) situé sur le second côté de l'éprouvette (1) et peut être reliée au second point de mise en prise (11L), dans lequel le second point latéral de mise en prise (11L) est opposé au premier point latéral de mise en prise (11T), et
au moins un dispositif de tension (18) permettant de tendre les première et seconde sections de câble.

2. Dispositif selon l'une quelconque des revendications précédentes, dans lequel le au moins un actionneur (5A) comprend un premier actionneur (5A) afin de dévier l'éprouvette (1) dans une première direction de déviation et un second actionneur (5B) permettant de dévier l'éprouvette (1) dans une seconde direction de déviation de manière transversale par rapport à la première direction de déviation ; et/ou dans lequel le au moins un actionneur (5A, 5B) comprend un actionneur vertical (5A) afin de dévier l'éprouvette (1) avec une composante directionnelle verticale, dans lequel, lorsque l'éprouvette (1) est déviée dans ladite direction, une traction est exercée sur la première section de câble et sur la seconde section de câble si les première et seconde sections de câble sont reliées à l'éprouvette (1), dans lequel le au moins un dispositif de tension (18) tend les première et seconde sections de câble de manière à exercer une force de rappel sur l'éprouvette (1) déviée ; et/ou dans lequel le au moins un actionneur (5A, 5B) comprend un actionneur horizontal (5B) afin de dévier l'éprouvette (1) dans une seconde direction de déviation avec une composante directionnelle horizontale.

3. Dispositif selon l'une quelconque des revendications précédentes, dans lequel le au moins un câble (12, 12T, 12L) comprend un premier câble (12T) et un second câble (12L),
dans lequel la première section de câble est une section du premier câble (12T) telle que le premier câble (12T) peut être relié au premier point de mise en prise (11T) et
la seconde section de câble est une section du second câble (12L) telle que le second câble (12L) peut être relié au second point de mise en prise (11L),
dans lequel le dispositif présente un premier dispositif d'immobilisation de câble (13F) afin de fixer le premier câble (12T) et un second dispositif d'immobilisation de câble (13F) afin de fixer le second câble (12L),
dans lequel le au moins un dispositif de tension (18) comprend un premier dispositif de tension (18B') et un second dispositif de tension (18B), dans lequel le premier dispositif de tension (18B') vient en prise avec le premier câble (12T) entre le premier rouleau de renvoi (13A) et le premier dispositif d'immobilisation de câble (13F'), et le second dispositif de tension (18B) vient en prise avec le second câble (12L) entre le second rouleau de renvoi (13B) et le second dispositif d'immobilisation de câble (13F).

4. Dispositif selon l'une quelconque des revendications 1 à 2,
dans lequel le au moins un câble (12) comprend un premier câble (12) et aussi bien la première section de câble que la seconde section de câble sont des sections dudit premier câble (12), de sorte que le premier câble (12) est guidé sur le premier rouleau de renvoi (13A) et le second rouleau de renvoi (13B) et peut être relié au premier point de mise en prise (11T) et au second point de mise en prise (11L), ou
dans lequel le au moins un câble (12) comprend un premier câble (12) et un second câble (12A), dans lequel la première section de câble est une section du premier câble (12) et la seconde section de câble est une section du second câble (12A), dans lequel les premier et second câbles sont reliés l'un à l'autre.

5. Dispositif selon la revendication 4,
dans lequel le au moins un câble (12) est relié à au moins une masse mobile (6), dans lequel la au moins une masse mobile (6) est mise sur palier de manière à osciller en particulier au moyen d'une charnière (10) et/ou est reliée au au moins un câble (12) par l'intermédiaire d'un bras de levier (9) et/ou d'une barre en angle (16), et/ou dans lequel la au moins une masse mobile (6) est en particulier mise sur palier de manière à pouvoir se déplacer le long du au moins un câble (12), en particulier sur des rouleaux, des patins ou des rails, par exemple sur une pente, et/ou dans lequel la masse mobile (6) est en particulier agencée de manière à subir un mouvement lorsque l'éprouvette est déviée dans une direction présentant une composante s'étendant le long du câble, par exemple présentant une composante horizontale, ce qui provoque une traction asymétrique au niveau de la première section de câble et de la seconde section de câble.

6. Dispositif selon la revendication 5, dans lequel la masse mobile (6) est agencée de sorte qu'une force de poids agit sur la masse mobile (6), ladite force de poids provoquant une traction statique au premier point de mise en prise (11T) ou au second point latéral de mise en prise (11L), ladite traction statique faisant subir à l'éprouvette (1) une déviation constante dans la direction de la traction, et/ou dans lequel la masse mobile (6) comprend une ou plusieurs masse(s) pouvant être déplacée(s) de manière horizontale et/ou comprend une ou plusieurs masse(s) qui est/sont mise(s) sur palier de manière à la ou les soutenir, de sorte qu'une force de poids agissant sur la ou les masse(s) mobile(s) (6) ne provoque pas de traction au premier point latéral de mise en prise (11T) ou au second point latéral de mise en prise (11L), dans lequel la masse mobile (6) est par exemple limitée à une ou plusieurs masse(s) de ce type.

7. Dispositif selon l'une quelconque des revendications 5 à 6, dans lequel le au moins un câble est conçu de telle manière qu'il va du premier point latéral de mise en prise (11T) jusqu'au premier rouleau de renvoi (13A), la masse mobile (6) et le dispositif de tension (18) viennent en prise avec le au moins un câble (12) après le premier rouleau de renvoi (13A) lorsqu'ils sont considérés depuis l'éprouvette (1), le au moins un câble (12) va jusqu'au second rouleau de renvoi (13B) après la masse mobile (6) et le dispositif de tension (18) et va du second rouleau de renvoi (13B) jusqu'au second point latéral de mise en prise (11L).

8. Dispositif selon l'une quelconque des revendications 5 à 7, comprenant un premier dispositif de tension (18A') et un second dispositif de tension (18A), dans lequel le au moins un câble (12) est conçu de telle manière qu'il va du premier point latéral de mise en prise (11T) jusqu'au premier rouleau de renvoi (13A), le premier dispositif de tension (18A') vient d'abord en prise avec le au moins un câble (12) après le premier rouleau de renvoi (13A) lorsqu'il est considéré depuis l'éprouvette (1), puis la au moins une masse mobile (6) vient en prise avec le au moins un câble (12), puis le second dispositif de tension (18A) vient en prise avec le au moins un câble (12) et le câble va du second dispositif de tension (18A) jusqu'au second rouleau de renvoi (13B) et va du second rouleau de renvoi (13B) jusqu'au second point latéral de mise en prise (11L).

9. Dispositif selon l'une quelconque des revendications précédentes, dans lequel le au moins un dispositif de tension (18) comprend un actionneur de tension (5C, 5C'), en particulier sous la forme d'un actionneur électrique, hydraulique ou pneumatique, et/ou un moteur (20) et/ou un treuil (21) et/ou un ressort (7) et/ou un ressort à lames (14) et/ou un ou plusieurs rouleau(x) de renvoi et/ou un palan et/ou dans lequel le dispositif de tension (18) est conçu comme un dispositif de tension actif comprenant un moteur et/ou un actionneur, dans lequel le moteur et/ou l'actionneur peu(ven)t être commandé(s) et/ou réglé(s).

10. Dispositif selon l'une quelconque des revendications précédentes, dans lequel le premier rouleau de renvoi (13A) et le second rouleau de déviation (13B) sont agencés à la même hauteur.

11. Dispositif selon l'une quelconque des revendications précédentes, conçu de telle manière que l'éprouvette (1) s'étend à l'état non dévié à travers une ligne de liaison allant du premier rouleau de renvoi (13A) jusqu'au second rouleau de renvoi (13B), de sorte que la première section de câble et la seconde section de câble peuvent être reliées à l'éprouvette (1) de telle manière qu'une traction transmise par la première section de câble et une traction transmise par la seconde section de câble agissent dans des directions opposées, en particulier dans des directions exactement opposées.

12. Dispositif selon l'une quelconque des revendications 1 à 10, conçu de telle manière que l'éprouvette (1) s'étend à l'état non dévié à l'extérieur d'une ligne de liaison allant du premier rouleau de renvoi (13A) jusqu'au second rouleau de renvoi (13B), de sorte que la première section de câble et la seconde section de câble peuvent être reliées à l'éprouvette (1) de telle manière qu'une traction transmise par la première section de câble et une traction transmise par la seconde section de câble exercent sur l'éprouvette non dévié (1) une précontrainte, en particulier dans une direction présentant une composante directionnelle verticale.

13. Système permettant de tester une éprouvette (1) allongée, comprenant le dispositif selon l'une quelconque des revendications précédentes et l'éprouvette (1), dans lequel l'éprouvette (1) est accrochée dans le dispositif d'accrochage (2) de sorte qu'elle s'étend à partir du dispositif d'accrochage (2) sur sa longueur dans la direction longitudinale présentant la composante directionnelle horizontale, dans lequel la première section de câble est reliée au premier point latéral de mise en prise (11T) et la seconde section de câble est reliée au second point de mise en prise (11L).

14. Procédé permettant de tester une éprouvette (1) allongée, avec utilisation d'un système selon la revendication 13,
dans lequel l'éprouvette (1) est déviée au moyen d'au moins un actionneur (5A) et les première et seconde sections de câble sont tendues au moyen du au moins un dispositif de tension (18), dans lequel l'éprouvette (1) est en particulier déviée dans une direction présentant une composante directionnelle verticale, de sorte qu'une force de rappel est exercée grâce au au moins un câble sur l'éprouvette (1) déviée verticalement.

15. Procédé selon la revendication 14, dans lequel l'éprouvette (1) est déviée dans une direction présentant une composante directionnelle horizontale, et le au moins un câble tolère la déviation horizontale et passe sur les premier et second rouleaux de renvoi (13A, 13B) en réponse à la déviation, dans lequel la déviation est influencée par exemple par au moins une masse mobile (6) reliée au au moins un câble (12).
